Europäisches Patentamt

European Patent Office

Office européen des brevets

(19)

(11) **EP 0 852 114 B1**

(12) **FASCICULE DE BREVET EUROPEEN**

(45) Date de publication et mention
de la délivrance du brevet:
**05.06.2002 Bulletin 2002/23**

(51) Int Cl.⁷: **A01N 63/00**

(21) Numéro de dépôt: **98400001.8**

(22) Date de dépôt: **05.01.1998**

(54) **Procédés d'éradication systématique du portage d'agents pathogènes par des animaux et compositions mises en oeuvre dans ces procédés**

Verfahren zur systematischen Beseitigung von Tierpathogenen und in diesen Verfahren verwendete Zusammensetzungen

Processes for the systematic eradication of pathogenic agents carried by animals and compositions used in these processes

(84) Etats contractants désignés:
**AT BE CH DE DK ES FI FR GB GR IE IT LI LU MC NL PT SE**

(30) Priorité: **06.01.1997 FR 9700057**

(43) Date de publication de la demande:
**08.07.1998 Bulletin 1998/28**

(73) Titulaire: **COBIOTEX**
**53960 Bonchamp-les-Laval (FR)**

(72) Inventeur: **Penaud, Jean**
**37000 Tours (FR)**

(74) Mandataire: **Orès, Bernard et al**
**Cabinet ORES**
**6, Avenue de Messine**
**75008 Paris (FR)**

(56) Documents cités:
**EP-A- 0 720 974       WO-A-93/13786**
**GB-A- 1 362 963       GB-A- 2 209 343**
**GB-A- 2 211 414**

## Description

La présente invention est relative à des procédés d'éradication systématique du portage d'agents pathogènes, par des animaux, tels que les différents membres d'un troupeau d'élevage, aussi bien avant leur mise en place dans un bâtiment convenable, qu'en leur présence dans lesdits bâtiments ainsi qu'aux produits mis en oeuvre dans de tels procédés.

On entend par portage d'agents pathogènes, les agents pathogènes retrouvés au niveau des animaux, au niveau de la litière ou des fosses de réception des déjections ou même au niveau du bâtiment.

Les bâtiments dans lesquels sont amenés à séjourner les animaux, lors des différentes phases de leur élevage, notamment bâtiments d'élevage des reproducteurs, salles de prélèvement et de conditionnement, et toutes annexes, couvoirs, salles de sexage, ainsi que les matériaux utilisés dans lesdits bâtiments et les véhicules lors du transport des animaux, sont un univers clos dans lequel vivent des animaux sous des concentrations élevées. Cette densité importante est un facteur favorable au développement d'un environnement microbien où sont présents des éléments pathogènes.

Malgré un renforcement des précautions d'hygiène, les aléas sanitaires sont encore fréquents. Il faut rechercher dans le développement d'un microbisme propre au troupeau les causes de ces épisodes pathologiques.

L'application des nouvelles réglementations concernant la protection de l'environnement, entraîne une restructuration de nombreux bâtiments, améliorant ainsi les conditions de vie des animaux, tant du point de vue logement que sanitaire. Cependant, certains objectifs indispensables et relatifs à l'environnement microbien pour un élevage moderne ne sont pas assez pris en compte.

Dans les élevages laitiers, la préoccupation concernant conjointement la santé du troupeau et la qualité du lait impose de concevoir le bâtiment, en fonction d'exigences qui pourraient être rangées sous le vocable général : environnement de l'animal.

Les récents travaux en écologie microbienne ont montré qu'il était impossible de dissocier l'animal, puis le troupeau, de leur environnement, qui inclut l'ensemble du bâtiment, dans lequel le troupeau passe la plupart de son temps.

En outre, le mode de distribution des aliments, notamment aux porcs et aux bovins, constitue une source de contamination exogène importante.

Or, pour les volailles par exemple, il est exigé, dans la majorité des productions, que celles-ci soient exemptes de portage de germes pathogènes.

Dans ce contexte, la Demanderesse s'est donné pour but l'élimination d'un certain nombre de contaminants bactériens à risque tels que par exemple salmonelles, *listeria*, coliformes, *clostridium* et staphylocoques, de l'environnement de l'élevage à protéger.

A l'heure actuelle, pour éradiquer ces différents agents pathogènes, on renforce essentiellement la prévention, au niveau alimentaire.

Chez les animaux, du fait de l'hétérogénéité du contenu gastrique, l'acidité et les enzymes gastriques ne constituent pas un filtre efficace contre l'intrusion par voie orale des microorganismes, plusieurs solutions ont été proposées, en particulier pour les monogastriques :

- l'incorporation d'acides organiques dans les aliments et l'eau de boisson :

Cette technique est connue depuis de nombreuses années, mais son application conduit souvent à des résultats hétérogènes, car la diversité des pH tout au long du tractus digestif impose l'utilisation de mélanges d'acides organiques dont les pouvoirs tampons s'exercent dans des plages identiques à celles des différents segments intestinaux. En particulier, les acides organiques incorporés à l'aliment doivent être actifs dans les zones distales de l'iléon où s'effectuent une multiplication intense de microorganismes aérobies ou pseudo-aérobies. Cette technique s'avère efficace, avec des acidifiants de bonne qualité, uniquement chez les mammifères monogastriques. Par contre, chez les volailles, compte tenu des particularités physiologiques de ces animaux, l'incorporation d'acides organiques dans l'eau de boisson vise, en fait, essentiellement un autre objectif qui est la consommation et la qualité de l'eau.

- la thermisation des aliments :

Des études récentes, plus spécialement orientées vers les salmonelles, ont montré que la contamination des aliments représentait 15 % des risques concernant l'intrusion des germes pathogènes dans les élevages avicoles.

Le traitement des aliments par la chaleur, permet d'éliminer à l'intérieur des particules d'aliments, la majorité de la flore de contamination, utile comme néfaste. La flore lactobacillaire est la première touchée. Il est à souligner que cette technique impose de modifier le mode d'incorporation de tous les micro-constituants, sensibles à la chaleur.

Cette technique présente, en outre, les inconvénients suivants : surcoût de fabrication des aliments, mauvaise fiabilité de la technique, subcarences dues à des déficits d'absorption (destruction des acides aminés libres, saturation des acides gras, réaction de Maillard...).

- incorporation d'oligosaccharides :

Certains sucres complexes comme les fructo- et manno-oligosaccharides ne peuvent être dégradés que par une flore spécifique, capable d'hydrolyser ces sucres. Ils sont insensibles aux enzymes duodénales, ce qui permet leur cheminement dans l'ensemble de l'intestin grêle, sans être dégradés. A l'arrivée dans la partie haute du colon, ces molécules sont utilisées par la flore lactobacillaire, qui se trouve ainsi favorisée dans son développement. La production d'acide lactique est ainsi augmentée. Par voie de conséquence, l'ensemble des germes à Gram négatif se trouve déprimé.

Des problèmes similaires se rencontrent également dans d'autres troupeaux d'élevage, en particulier le porc ou le lapin.

- adjonction alternative d'antibiotiques dans l'alimentation.

Toutefois, les techniques palliatives actuellement proposées ne permettent pas une éradication totalement efficace des germes pathogènes.

La Demanderesse a trouvé que pour effectivement éliminer totalement ces germes, d'un univers aussi complexe que celui du troupeau dans ses différentes phases d'élevage, il importe d'intervenir simultanément sur les différentes voies d'accès de ces microorganismes. En effet, quatre voies principales sont à considérer quant à leur implication pour l'introduction d'un germe pathogène dans l'écosystème du troupeau :

- écosystème microbien digestif et relation avec l'aliment et l'eau d'abreuvement,
- écosystème microbien du bâtiment,
- écosystème microbien de la litière,
- éléments extérieurs venant perturber les différents écosystèmes, tels que insectes, rongeurs....

Chaque écosystème a ses particularités, mais il influence les autres écosystèmes, comme lui-même est influencé par les autres.

- écosystème microbien digestif et relation avec l'alimentation :

En effet, habituellement un troupeau qui présente une épidémie due à un agent pathogène, même s'il est traité par des moyens conventionnels (antibiothérapie, par exemple), il est très fréquent que 15 jours-3 semaines après l'arrêt du traitement, l'élevage considéré comme négatif du point de vue du portage ($\rightarrow$ porteur apparemment sain), redevienne positif vis-à-vis du même agent pathogène (porteur et excréteur dudit microorganisme pathogène).

Les modifications de l'équilibre alimentaire s'accompagnent, au niveau de l'écosystème microbien digestif, de perturbations très rapides qui désorganisent l'équilibre de la flore digestive en quelques minutes. Les bactéries pathogènes peuvent alors plus facilement s'exprimer et éliminer leurs toxines responsables de la pathogénicité.

- écosystème microbien du bâtiment :

Les microorganismes présents dans l'ambiance du bâtiment sont pour certains attirés et fixés sur l'ensemble des parois du bâtiment où ils constituent petit à petit un biofilm.

Ce biofilm, résistant aux différents traitements de désinfection (formol gazeux, chlore, par exemple), du fait, notamment, de la libération de glycoprotéines de stress par les microorganismes le constituant, est constitué aléatoirement des différentes souches bactériennes qui ont été présentes au cours du temps au sein de ce bâtiment, dont différents germes pathogènes.

Ces biofilms se développent sur toutes les surfaces disponibles et tout particulièrement dans les fissures et anfractuosités qui sont peu accessibles aux désinfectants. Au fur et à mesure de l'utilisation du bâtiment, le biofilm se charge en bactéries pathogènes.

En outre, certaines bactéries de ce biofilm peuvent être réactivées par le réchauffement et l'humidification de l'air ambiant. Ces conditions sont favorables à un développement bactérien qui bénéficie d'un apport nutritif véhiculé par les grains de poussière.

Ainsi, lorsqu'il renferme des germes pathogènes majeurs, le biofilm constitue un risque permanent car, suivant sa charge en microorganismes, certains éléments seront éjectés de ce biofilm, du fait du manque de place.

- écosystème microbien des litières

Dans les bâtiments d'élevage, la litière doit assurer deux fonctions normalement opposées :

. assurer un confort indispensable, tant au plan physique que sanitaire,
. recevoir les déjections, tout en pénalisant le moins possible la qualité et la propreté bactériologique de la zone de vie des animaux.

Ces exigences imposent que l'épaisseur de la litière soit suffisante afin, d'une part, d'assurer une isolation correcte de l'animal et, d'autre part, d'assurer un taux de matière sèche suffisant de façon à limiter la vitesse de prolifération des germes dans la litière, car celle-ci est le principal réservoir bactérien du bâtiment.

Au moment du changement de bande d'animaux ou du renouvellement de la litière, l'écosystème existant est brutalement rompu et un nouvel écosystème va se constituer en relation avec les différents événements qui jalonnent la période d'élevage.

Cependant, différents éléments peuvent venir lourdement influencer la mise en place de ce nouvel écosystème :

. la charge bactérienne apportée par la paille, les copeaux ou les autres éléments constitutifs de la litière. Tout élément humide apporte avec lui une contamination constituée de bactéries et de moisissures ;
. les petits îlots oubliés provenant de la précédente bande. Ils constituent des écosystèmes organisés parfaitement aptes à imposer leurs différents éléments constitutifs.

L'écosystème est également influencé dans son développement et dans l'incorporation de différentes souches de microorganismes, par les conditions physico-chimiques existant au sein de la litière.

La concentration élevée en $NH_3$ est un facteur particulièrement favorable au développement des colibacilles, salmonelles, staphylocoques.... Cet effet est renforcé par l'adjonction à la litière de composés calciques, tamponnant le milieu à un pH basique et maintenant l'ammoniac sous forme $NH_3$ soluble au détriment de la forme $NH_4$ insoluble. Ce système est particulièrement favorable au développement des salmonelles.

- éléments extérieurs :

Malgré les précautions usuelles, destinées à éviter la pénétration de différents éléments extérieurs dans les bâtiments d'élevage, tels qu'insectes, rongeurs, oiseaux..., ceux-ci peuvent apporter au sein du bâtiment, divers éléments d'une flore pathogène pouvant venir influencer l'écosystème propre du bâtiment ; il est donc important de pouvoir éradiquer le plus rapidement possible ces éléments de façon à conserver l'intégrité de l'environnement du troupeau.

C'est pourquoi la Demanderesse s'est donné pour but de pourvoir à un procédé d'éradication du portage d'agents pathogènes par les différents membres d'un troupeau d'élevage, dans les bâtiments où ils sont susceptibles de séjourner, aussi bien avant la mise en place du troupeau qu'en présence des animaux, qui réponde mieux aux besoins de la pratique que les techniques de l'art antérieur.

La présente invention a pour objet un procédé préventif, pour l'éradication systématique du portage d'agents pathogènes par des animaux ou les différents membres d'un troupeau d'élevage, avant le transport ou la mise en place desdits animaux dans des bâtiments convenables (procédé ① ), caractérisé en ce qu'il comprend :

(a) la pulvérisation des parois et des plafonds des bâtiments, de façon homogène, avec une solution aqueuse essentiellement constituée d'un complexe bactérien comprenant essentiellement au moins deux *Bacillus* non pathogènes sélectionnés dans le groupe constitué par *B. subtilis*, *B. amyloliquefaciens* et *B. megaterium*, chacun à une concentration comprise entre $10^2$ et $5.10^4$ ufc/ml, de préférence à une concentration de $3.10^4$ ufc/ml, au moins deux *Lactobacillus* non pathogènes sélectionnés dans le groupe constitué par *L. paracasei* et *L. rhamnosus* et au moins un *Pediococcus* non pathogène, chacun à une concentration comprise entre $10^4$ et $5.10^8$ ufc/ml, de manière préférée entre $5.10^5$ et $5.10^8$ ufc/ml, de manière encore plus préférée $5.10^7$ ufc/ml, lequel complexe bactérien est associé à au moins un diluant nutritif convenable soluble dans l'eau, tel qu'un sucre, conformément au programme de pulvérisation suivant :

- première pulvérisation au moment de la préparation des bâtiments pour la réception des animaux,
- éventuellement deuxième pulvérisation entre 12 et 48 heures après la première pulvérisation,
- et éventuellement troisième pulvérisation, environ 7 jours plus tard (c'est-à-dire en présence des animaux),

ledit programme de pulvérisation étant répété à la mise en place de chaque nouvelle bande,

EP 0 852 114 B1

(b) l'épandage sur les sols des bâtiments, de façon homogène, d'une composition sous forme solide, de type poudre ou granules, comprenant (i) un complexe bactérien constitué essentiellement d'au moins un *B. subtilis* et d'au moins un autre *Bacillus* non pathogène, sélectionné dans le groupé constitué par *B. amyloliquefaciens*, *B. megaterium*, *B. licheniformis* et *B. circulans*, chacun à une concentration comprise entre $10^3$ et $10^6$ ufc/g, de préférence égale ou supérieure à $10^4$ ufc/g, d'au moins un *Lactobacillus* non pathogène sélectionné dans le groupe constitué par *L. paracasei*, *L. rhamnosus*, *L. fermentum* et *L. acidophilus* et d'au moins un *Pediococcus* non pathogène, chacun à une concentration comprise entre $10^3$ et $10^8$ ufc/g, de préférence entre $10^4$ et $10^6$ ufc/g, (ii) au moins un diluant nutritif, (iii) au moins un diluant présentant des propriétés électrostatiques et (iv) au moins un support fixateur de microparticules, conformément au programme d'épandage suivant :

- premier épandage sur les sols des bâtiments, avant la mise en place des litières ou des lisiers,
- mise en place des litières, s'il y a lieu, suivie d'un deuxième épandage sur lesdites litières,
- puis, après mise en place des animaux, épandage sur l'ensemble de la surface du sol et des litières ou des lisiers, une fois par semaine ; et

(c) pulvérisation, si nécessaire, du matériel utilisé dans lesdits bâtiments, avec une solution comprenant un complexe bactérien constitué essentiellement d'au moins deux *Bacillus* non pathogènes sélectionnés dans le groupe constitué par *B. subtilis*, *B. amyloliquefaciens* et *B. megaterium*, chacun à une concentration comprise entre $10^2$ et $5.10^4$ ufc/ml, de préférence à une concentration de $3.10^4$ ufc/ml, d'au moins deux *Lactobacillus* non pathogènes sélectionnés dans le groupe constitué par *L. paracasei* et *L. rhamnosus* et d'au moins un *Pediococcus* non pathogène, chacun à une concentration comprise entre $10^4$ et $5.10^8$ ufc/ml, de préférence à une concentration de $10^6$ ufc/ml ou de $5.10^7$ ufc/ml, associé à au moins un diluant nutritif soluble dans l'eau sélectionné dans le groupe constitué par des sources d'acides aminés tel qu'un extrait de levure à 0,01-0,5 % et des sucres et

(d) dès la mise en place du troupeau, l'ajout systématique à l'alimentation dudit troupeau de produits probiotiques.

Pour les lisiers, les épandages, effectués après le premier épandage, ne seront effectués qu'en présence des animaux.

On entend, au sens de la présente invention, par diluant nutritif un composé soluble dans l'eau de type énergétique, tel que des sucres (lactose par exemple) ou des acides aminés.

De tels diluants, associés aux différents complexes bactériens mis en oeuvre en solution aqueuse et destinés à la pulvérisation des parois, des plafonds, des sols des bâtiments (étape (a)) et du matériel utilisé dans lesdits bâtiments (étapes (c) et (b')), constituent une réserve nutritive pour les bactéries et leur confèrent une activité accrue ainsi qu'une vitesse de multiplication plus importante.

Les différents complexes bactériens mis en oeuvre sous forme solide et destinés à l'entretien des litières ou des lisiers (étape (b)) sont plus précisément décrits dans la Demande de Brevet Européen n° 0 720 974. Ils sont toutefois mis en oeuvre, dans la présente invention dans une fourchette de valeurs particulières et sous la forme d'une composition comprenant le complexe bactérien, dilué une première fois dans un premier diluant nutritif tel que du lactose qui ne doit pas excéder 40 % de la quantité totale du diluant et une deuxième fois dans un diluant présentant des propriétés électrostatiques telle qu'une argile colloïdale de type ADL®, pour permettre l'autofixation du complexe bactérien dilué sur au moins un support fixateur de micro-particules (ou support de dispersion granuleux et microporeux) tel que $CaCO_3$...La première dilution a pour effet de stabiliser le complexe bactérien, alors que la deuxième dilution permet une répartition uniforme des bactéries sur la totalité du support fixateur de microparticules, grâce à l'action d'homogénéisation de l'agent de dispersion de type ADL®. Les complexes bactériens ainsi dilués sont ensuite mis sur ledit support dans un rapport de concentration de 2 à 15 % de complexe dilué/support (p/p) (2:98 à 15:85, de préférence 5:95). Cette fixation sur support permet d'améliorer la survie des bactéries avant utilisation ainsi que d'accélérer la reprise de l'activité bactérienne, dans le but de permettre une action prolongée des bactéries au cours du temps, après leur intégration aux litières et aux lisiers.

Les probiotiques mis en oeuvres à l'étape (d) sont de préférence sélectionnés parmi les probiotiques suivants : probiotiques de type lactobacille ou levure, autorisés au niveau de l'union européenne, comme additif.

Une première variante du procédé selon l'invention (procédé ② ) est relative à sa mise en oeuvre dans des bâtiments ne comportant ni litières, ni lisiers, de type couvoir, salles de prélèvement ou tous locaux réclamant une éradication des germes pathogènes.

Une telle variante ne comprend donc pas les étapes (b) et (d) précitées.

De manière plus précise, selon cette variante (procédé ② , le procédé préventif pour l'éradication systématique du portage d'agents pathogènes par les différents membres d'un troupeau d'élevage comprend :

(a) la pulvérisation des parois, des plafonds et des sols des bâtiments, de façon homogène, avec une solution aqueuse telle que définie à l'étape (a) du procédé ① , selon le programme de pulvérisation suivant :

- première pulvérisation au moment de la préparation des bâtiments pour la réception des animaux,
- éventuellement deuxième pulvérisation entre 12 et 48 heures après la première pulvérisation,

ledit programme de pulvérisation étant répété lors du remplacement des animaux ou à la mise en place de chaque nouvelle bande et

(b') pulvérisation systématique du matériel utilisé dans lesdits bâtiments, avant et/ou après chaque opération, avec une solution comprenant un complexe bactérien constitué essentiellement d'au moins deux *Bacillus* non pathogènes sélectionnés dans le groupe constitué par *B. subtilis*, *B. amyloliquefaciens* et *B. megaterium*, chacun à une concentration comprise entre $2.10^2$ et $10^5$ ufc/ml, de préférence à une concentration de $5.10^2$ ufc/ml, d'au moins deux *Lactobacillus* non pathogènes sélectionnés dans le groupe constitué par *L. paracasei* et *L. rhamnosus* et d'au moins un *Pediococcus* non pathogène, chacun à une concentration comprise entre $10^4$ et $5.10^8$ ufc/ml, de préférence à une concentration de $10^6$ ufc/ml, associé à au moins un diluant nutritif soluble dans l'eau sélectionné dans le groupe constitué par des sources d'acides aminés tel qu'un extrait de levure à 0,01-0,5 % et des sucres.

On entend par exemple par opération, le tri et le sexage des poussins, après éclosion des oeufs.

Une deuxième variante du procédé selon l'invention (procédé ③ ) est relative à sa mise en oeuvre, lorsque les animaux sont déjà en place dans lesdits bâtiments ; dans ce cas, le procédé d'éradication selon l'invention comprend :

(a) la pulvérisation des parois et des plafonds des bâtiments ainsi que des litières ou des lisiers, de façon homogène, avec une solution aqueuse telle que définie à l'étape (a) du procédé ① , selon le programme de pulvérisation suivant :

- première pulvérisation au début du traitement,
- éventuellement deuxième pulvérisation 12 à 48 heures plus tard,
- et éventuellement troisième pulvérisation, environ 7 jours plus tard,

(b) l'épandage sur les litières ou les lisiers en place, de façon homogène, d'une composition sous forme solide, du type poudre ou granules, telle que définie à l'étape (b) du procédé ① , conformément au programme d'épandage suivant :

- premier épandage sur les litières ou les lisiers en place, et pour les litières uniquement, mise en place d'une paille fraîche et deuxième épandage,
- puis, une fois par semaine, épandage de l'ensemble des sols, des litières ou des lisiers ;

(c) pulvérisation, si nécessaire, du matériel utilisé dans lesdits bâtiments, avec une solution telle que définie à l'étape (c) du procédé ①  et

(d) ajout systématique à l'alimentation dudit troupeau de produits probiotiques.

De manière inattendue, un procédé qui intervient simultanément au moins (1) au niveau alimentaire, (2) sur le contrôle microbien des litières et (3) sur le contrôle des bâtiments, permet effectivement une éradication de certains pathogènes ciblés, tels que salmonelles, *listeria*, les coliformes, *clostridium* et les staphylocoques.

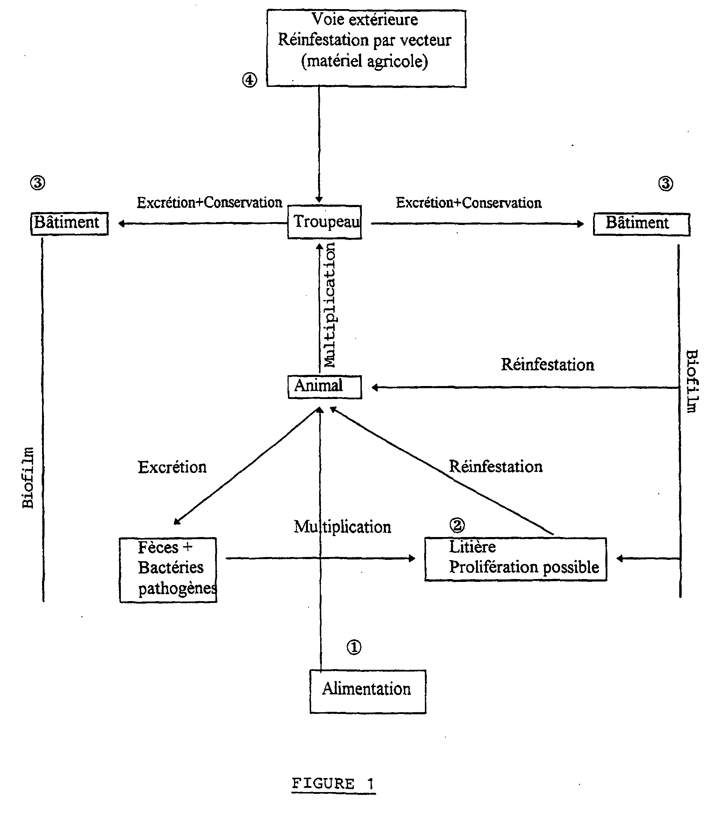

De manière surprenante, seule la combinaison d'étapes telles que définies ci-dessus permet effectivement d'éradiquer le portage d'agents pathogènes, alors que l'action sur une seule des voies (1) (alimentation), (2) (litière), (3) (biofilm) ou (4) (matériel agricole) (voir figure 1) est insuffisante.

En effet, le procédé selon la présente invention qui intervient simultanément au niveau digestif et au niveau de l'environnement (bâtiment et litière) permet effectivement d'éliminer les risques de réinfestation, en particulier :

*   le traitement des bâtiments par voie bactérienne a l'avantage d'assurer une stabilité de l'écosystème et d'intervenir sur la composition du biofilm ; et
*   le traitement des litières par voie bactérienne présente un double avantage :

- assurer une stabilité de l'écosystème et orienter celui-ci pour éviter l'incorporation de germes pathogènes majeurs,
- assurer, par la présence de certaines familles de bactéries, un métabolisme azoté allant dans le sens de l'anabolisme protidique et de réduire, par voie de conséquence, la proportion d'azote ammoniacal présente dans le bâtiment et disponible pour les bactéries pathogènes.

Les concentrations des différents complexes mis en oeuvre aux étapes (a), (b), (b') et (c) sont exprimées en concentrations finales (forme prête à l'emploi).

Les différents complexes bactériens destinés à être mis en oeuvre aux étapes (a), (b), (b') et (c) comprennent, de manière avantageuse, les souches décrites dans la Demande de Brevet européen n° 0 720 974, à savoir :

. des souches de *Bacillus* à Gram positif, susceptibles d'utiliser comme source d'azote, de l'azote minéral, notamment l'ammoniaque, les nitrates, les nitrites et des molécules d'azote organique telles que l'urée, l'urate, les aminoacides, les bases azotées ou d'autres composés azotés de faible poids moléculaire, présentant au moins l'une des activités enzymatiques suivantes: activité amylolytique, activité cellulolytique, activité lignocellulolytique, activité pectinolytique, activité lipolytique, activité protéolytique, activité kératolytique et au moins les caractéristiques biochimiques suivantes : gélatinase +, catalase +, uréase -, oxydase -, indole -, et qui sont de préférence aérobies/anaérobies facultatives. Lesdites souches de *Bacillus* ont été déposées auprès de la Collection Nationale de Cultures de Micro-organismes (CNCM), en date du 8 juin 1994, pour ce qui concerne *Bacillus subtilis*, sous les numéros I-1433, I-1438 et I-1440, pour ce qui concerne *Bacillus amyloliquefaciens*, sous les numéros 1-1434 et I-1435, pour ce qui concerne *Bacillus megaterium*, sous le numéro I-1436, pour ce qui concerne *Bacillus licheniformis* sous le numéro 1-1437 et pour ce qui concerne *Bacillus circulans*, sous le numéro I-1439 ;

. des souches de *Lactobacillus* à Gram positif, susceptibles d'utiliser comme source d'azote, de l'azote minéral, notamment l'ammoniaque, les nitrates, les nitrites et des molécules d'azote organique telles que l'urée, l'urate, les aminoacides, les bases azotées ou d'autres composés azotés de faible poids moléculaire, qui présentent au moins une activité de type bactériocine ou bactériocine-like, et au moins les caractéristiques biochimiques suivantes : catalase-, oxydase - et qui sont de préférence aérobies/anaérobies facultatives. Lesdites souches de *Lactobacillus* ont été déposées auprès de la Collection Nationale de Cultures de Micro-organismes (CNCM), en date du 28 juillet 1994, pour ce qui concerne *Lactobacillus rhamnosus* sous les numéros I-1450, I-1452, I-1453, I-1454, I-1455, I-1456, I-1459, pour ce qui concerne *Lactobacillus paracasei*, sous les numéros I-1451, I-1457 et I-1458, pour ce qui concerne *Lactobacillus acidophilus*, sous le numéro I-1460 et pour ce qui concerne *Lactobacillus fermentum*, sous le numéro I-1461 ;

. des souches de *Pediococcus* à Gram positif qui présentent une activité de type bactériocine ou bactériocine-like au moins vis-à-vis de *Staphylococcus aureus*, et au moins les caractéristiques biochimiques suivantes : catalase -, oxydase - et qui sont de préférence aérobies/anaérobies facultatives. On peut notamment citer comme souche de *Pediococcus* répondant à cette définition, la souche *Pediococcus pentosaceus*, déposée auprès de la Collection Nationale de Cultures de Micro-organismes (CNCM), en date du 22 décembre 1995, sous le numéro I-1654.

Selon un mode de mise oeuvre avantageux du procédé selon la présente invention, les solutions mises en oeuvre à l'étape (a) comprennent un complexe bactérien constitué de deux *B. subtilis*, d'un *B. amyloliquefaciens* et d'un *B. megaterium*, chacun à une concentration de $10^2$-$3.10^4$ ufc/ml, d'au moins trois *Lactobacillus,* parmi lesquels au moins un *L. rhamnosus* et un *L. paracasei*, les autres *Lactobacillus* présents dans ladite solution étant sélectionnés dans le groupe constitué par *L. rhamnosus*, *L. paracasei*, *L. acidophilus*, *L. fermentum* et d'un *Pediococcus pentosaceus*, chacun à une concentration comprise entre $10^4$ et $5.10^7$ ufc/ml, de préférence entre $5.10^5$ et $5.10^7$ ufc/ml.

Selon une disposition avantageuse de ce mode de mise en oeuvre de l'invention, lesdites solutions de l'étape (a) comprennent deux *B. subtilis*, un *B. amyloliquefaciens*, un *B. megaterium*, tels que définis ci-dessus, chacun à une concentration de $3.10^4$ ufc/ml, deux ou trois *L. rhamnosus*, un *L. paracasei*, un *L. acidophilus*, un *Pediococcus pentosaceus* et éventuellement un *L. fermentum*, tels que définis ci-dessus, chacun à une concentration de $5.10^7$ ufc/ml.

Selon un autre mode de mise en oeuvre avantageux du procédé selon l'invention, les solutions mises en oeuvre à l'étape (a) sont à une concentration en complexe bactérien de 0,5 à 2 % (p/v).

Selon encore un autre mode de mise en oeuvre du procédé selon l'invention, les solutions mises en oeuvre à l'étape (a) sont pulvérisées à raison de 10-100 ml/m$^2$.

Selon un autre mode de mise oeuvre avantageux du procédé selon la présente invention, les compositions solides mises en oeuvre à l'étape (b), pour le traitement des litières, comprennent, comme complexes bactériens :

\* pour les volailles :

deux *B. subtilis*, un *B. amyloliquefaciens* et un *B. megaterium* tels que définis ci-dessus, chacun à une concentration de $5.10^3$-$10^5$ ufc/g, de préférence d'au moins $10^4$ ufc/g, au moins trois *Lactobacillus*, parmi lesquels au moins un *L. rhamnosus* et un *L. paracasei*, les autres *Lactobacillus* présents dans ladite composition étant sélectionnés dans le groupe constitué par *L. rhamnosus*, *L. paracasei*, *L. acidophilus*, *L. fermentum* et un *Pediococcus pentosaceus*, chacun à une concentration comprise entre $10^4$ et $10^6$ ufc/g, de préférence $5.10^4$ ufc/g.

\* pour les ruminants, les équidés et les porcs :

les quatre *Bacillus* suivants : deux *B. subtilis*, un *B. amyloliquefaciens*, un *B. megaterium* tels que définis ci-dessus, chacun à une concentration comprise entre $10^3$ et $10^5$ ufc/g, de préférence à une concentration de $10^4$ ufc/g et les cinq *Lactobacillus* suivants : deux *L. rhamnosus*, un *L. paracasei*, un *L. acidophilus*, un *L. fermentum* et un *Pediococcus pentosaceus* tels que définis ci-dessus, chacun à une concentration comprise entre $10^3$ et $10^6$ ufc/g, de préférence à une concentration de $5.10^4$ ufc/g.

Selon encore un autre mode de mise en oeuvre avantageux du procédé selon l'invention, les compositions solides mises en oeuvre à l'étape (b), pour le traitement des lisiers comprennent, comme complexes bactériens :

* pour les volailles :

les quatre *Bacillus* suivants : deux *B. subtilis*, un *B. amyloliquefaciens* et un *B. megaterium* tels que définis ci-dessus, chacun à une concentration de $5.10^3$-$10^6$ ufc/g, de préférence $5.10^4$ ufc/g, les six *Lactobacillus* suivants: trois *L. rhamnosus*, un *L. paracasei*, *un L. acidophilus*, un *L. fermentum* et un *Pediococcus pentosaceus*, chacun à une concentration comprise entre $5.10^3$ et $10^6$ ufc/g, de préférence $5.10^4$ ufc/g.

* pour les ruminants, les équidés et les porcs :

les quatre *Bacillus* suivants : deux *B. subtilis*, un *B. amyloliquefaciens*, un *B. megaterium* tels que définis ci-dessus, chacun à une concentration comprise entre $10^3$-$5.10^5$ ufc/g, de préférence $10^4$ ufc/g, les quatre *Lactobacillus* suivants : un *L. rhamnosus*, un *L. paracasei*, un *L. acidophilus* et un *L. fermentum* tels que définis ci-dessus et un *Pediococcus pentosaceus*, chacun à une concentration comprise entre $10^3$ et $10^6$ ufc/g, de préférence $5.10^4$ ufc/g.

Selon un autre mode de mise en oeuvre avantageux du procédé selon l'invention, les compositions selon l'étape (b) sont répandues à raison de 10 à 100 g/m$^2$.

Selon encore un autre mode de mise en oeuvre du procédé selon l'invention, les solutions mises en oeuvre à l'étape (c) ou à l'étape (b') comprennent, comme diluant nutritif, un extrait de levure à 0,01 % à 0,5 %, de préférence à 0,1 % et un sucre.

Selon encore un autre mode de mise oeuvre avantageux desdits procédés, les agents pathogènes préférentiellement éradiqués sont les salmonelles, *listeria*, les coliformes, *clostridium* et les staphylocoques.

La présente invention a également pour objet des solutions aqueuses de complexes bactériens aptes à être mises en oeuvre aux étapes (a), (c) et (b') des procédés selon l'invention et à intervenir dans l'éradication du portage d'agents pathogènes par des animaux, par exemple les différents membres d'un troupeau.

Parmi ces différentes solutions aqueuses, on peut citer :

- des solutions aqueuses mises en oeuvre à l'étape (a), comprenant un complexe bactérien constitué de deux *B. subtilis*, d'un *B. amyloliquefaciens* et d'un *B. megaterium*, chacun à une concentration de $10^2$-$5.10^4$ ufc/ml, de préférence à une concentration de $3.10^4$ ufc/ml, d'au moins trois *Lactobacillus*, parmi lesquels au moins un *L. rhamnosus* et un *L. paracasei*, les autres *Lactobacillus* présents dans ladite solution étant sélectionnés dans le groupe constitué par *L. rhamnosus*, *L. paracasei*, *L. acidophilus*, *L. fermentum* et un *Pediococcus pentosaceus*, chacun à une concentration comprise entre $10^4$ et $5.10^8$ ufc/ml, de manière préférée entre $5.10^5$ et $5.10^8$ ufc/ml, de manière encore plus préférée $5.10^7$ ufc/ml, associé à au moins un diluant nutritif convenable soluble dans l'eau.

- des solutions aqueuses mises en oeuvre à l'étape (c) qui comprennent les mêmes complexes bactériens aux mêmes concentrations que pour les solutions aqueuses mises en oeuvre à l'étape (a), associés à au moins un diluant nutritif soluble dans l'eau sélectionné dans le groupe constitué par des sources d'acides aminés tel qu'un extrait de levure à 0,01 % à 0,5 et des sucres.

- des solutions aqueuses mises en oeuvre à l'étape (b') qui comprennent un complexe bactérien constitué de deux *B. subtilis*, d'un *B. amyloliquefaciens* et d'un *B. megaterium*, chacun à une concentration comprise entre $2.10^2$ et $10^5$ ufc/ml, de préférence $5.10^2$ ufc/ml, d'au moins trois *Lactobacillus*, parmi lesquels au moins un *L. rhamnosus* et un *L. paracasei*, les autres *Lactobacillus* présents dans ladite solution étant sélectionnés dans le groupe constitué par *L. rhamnosus*, *L. paracasei*, *L. acidophilus*, *L. fermentum* et un *Pediococcus pentosaceus*, chacun à une concentration comprise entre $10^4$ et $5.10^8$ ufc/ml, de préférence à une concentration de $10^6$ ufc/ml et, comme diluant nutritif, un mélange comprenant un extrait de levure à 0,01-0,5 %, de préférence à 0,1 % et un sucre.

La présente invention a également pour objet des compositions solides à base de complexes bactériens, aptes à être mises en oeuvre à l'étape (b) des procédés selon la présente invention et à intervenir dans l'éradication du portage d'agents pathogènes par des animaux, par exemple les différents membres d'un troupeau.

Parmi ces différentes compositions solides, on peut citer :

- des compositions de traitement « litières de volailles » comprenant deux *B. subtilis*, un *B. amyloliquefaciens* et un *B. megaterium* tels que définis ci-dessus, chacun à une concentration de $5.10^3$-$10^5$ ufc/g, de préférence d'au moins $10^4$ ufc/g, au moins trois *Lactobacillus*, parmi lesquels au moins un *L. rhamnosus* et un *L. paracasei*, les autres *Lactobacillus* présents dans ladite composition étant sélectionnés dans le groupe constitué par *L. rhamnosus, L. paracasei, L. acidophilus, L. fermentum* et un *Pediococcus pentosaceus*, chacun à une concentration comprise entre $10^4$ et $10^6$ ufc/g, de préférence $5.10^4$ ufc/g ;

- des compositions de traitement « litières de ruminants, de porcs ou d'équidés » comprenant les quatre *Bacillus* suivants : deux *B. subtilis*, un *B. amyloliquefaciens*, *B. megaterium* tels que définis ci-dessus, chacun à une concentration comprise entre $10^3$ et $10^5$ ufc/g, de préférence à une concentration de $10^4$ ufc/g et les cinq *Lactobacillus* suivants : deux *L. rhamnosus*, un *L. paracasei*, un *L. acidophilus*, un *L. fermentum* tels que définis ci-dessus, chacun à une concentration comprise entre $10^3$ et $10^6$ ufc/g, de préférence $5.10^4$ ufc/g ;

- des compositions de traitement « lisiers de volailles » comprenant les quatre *Bacillus* suivants : deux *B. subtilis*, un *B. amyloliquefaciens* et un *B. megaterium* tels que définis ci-dessus, chacun à une concentration de $5.10^3$-$10^6$ ufc/g, de préférence $5.10^4$ ufc/g, les six *Lactobacillus* suivants : trois *L. rhamnosus*, un *L. paracasei*, un *L. acidophilus*, un *L. fermentum* et un *Pediococcus pentosaceus*, chacun à une concentration comprise entre $5.10^3$ et $10^6$ ufc/g, de préférence $5.10^4$ ufc/g.

- des compositions de traitement « lisiers de ruminants, d'équidés et de porcs » comprenant les quatre *Bacillus* suivants : deux *B. subtilis*, un *B. amyloliquefaciens*, un *B. megaterium* tels que définis ci-dessus, chacun à une concentration comprise entre $10^3$-$5.10^5$ ufc/g, de préférence $10^4$ ufc/g, les quatre *Lactobacillus* suivants : un *L. rhamnosus*, un *L. paracasei*, un *L. acidophilus* et un *L. fermentum* tels que définis ci-dessus et un *Pediococcus pentosaceus*, chacun à une concentration comprise entre $10^3$ et $10^6$ ufc/g, de préférence $5.10^4$ ufc/g.

L'ensemble de ces compositions solides comprennent en outre, comme défini ci-dessus, au moins un diluant nutritif tel que le lactose et au moins un diluant ayant des propriétés électrostatiques tel qu'une argile colloïdale de type ADL®, favorisant l'autofixation du complexe sur au moins un support fixateur de microparticules du type $CaCO_3$, dans les rapports précisés ci-dessus.

La présente invention a également pour objet l'utilisation, dans un procédé d'éradication d'agents pathogènes d'animaux, de solutions aqueuses de complexes bactériens telles que définies ci-dessus, aptes à être mises en oeuvre aux étapes (a) (pulvérisation sur les parois et les plafonds des bâtiments), (c) (pulvérisation sur le matériel utilisé dans les bâtiments) et (b') (pulvérisation sur le matériel utilisé dans les bâtiments ne comportant ni litières ni lisiers).

La présente invention à également pour objet l'utilisation, dans un procédé d'éradication d'agents pathogènes d'animaux, de compositions solides de complexes bactériens telles que définies ci-dessus, aptes à être mises en oeuvre à l'étape (b) (épandage sur les sols, les litières ou les lisiers utilisés par lesdits animaux).

La présente invention a, en outre, pour objet un coffret d'éradication systématique du portage d'agents pathogènes par des animaux, tels que les différents membres d'un troupeau d'élevage, caractérisé en ce qu'il comprend les produits suivants :

a) une composition essentiellement constituée d'un complexe bactérien, sous la forme de poudre et prêt à être mis en solution dans de l'eau, pour le traitement des murs et des plafonds d'un bâtiment et éventuellement des sols, des litières ou des lisiers, comprenant essentiellement au moins deux *Bacillus* non pathogènes sélectionné dans le groupe constitué par *B. subtilis*, *B. amyloliquefaciens* et *B. megaterium*, chacun à une concentration finale en solution comprise entre $10^2$ et $5.10^4$ ufc/ml, au moins deux *Lactobacillus* non pathogènes sélectionnés dans le groupe constitué par *L. paracasei* et *L. rhamnosus* et au moins un *Pediococcus* non pathogène, chacun à une concentration finale en solution comprise entre $10^4$ et $5,10^8$ ufc/ml, associé à au moins un diluant nutritif convenable soluble dans l'eau ;

b) une composition sous la forme de poudre ou granules, pour le traitement des sols et des litières comprenant (i) un complexe bactérien constitué essentiellement d'au moins *B. subtilis* et d'au moins un autre *Bacillus* non pathogène, sélectionné dans le groupe constitué par *B. amyloliquefaciens*, *B. megaterium*, *B. licheniformis et B. circulans*, chacun à une concentration finale comprise entre $10^3$ et $10^6$ ufc/g, de préférence d'au moins $10^4$ ufc/g, d'au moins un *Lactobacillus* non pathogène sélectionné dans le groupe constitué par *L. paracasei*, *L. rhamnosus*, *L. fermentum* et *L. acidophilus* et d'au moins un *Pediococcus* non pathogène, chacun à une concentration finale comprise entre $10^3$ et $10^8$ ufc/g, de préférence entre $10^4$ et $10^6$ ufc/g, (ii) au moins un diluant nutritif, (iii) au moins un diluant présentant des propriétés électrostatiques et (iv) au moins support un fixateur de microparticules ; et

c) une composition comprenant essentiellement un complexe bactérien, sous la forme de poudre et prêt à être mis en solution dans de l'eau, pour le traitement du matériel, comprenant essentiellement au moins deux *Bacillus* non pathogènes sélectionnés dans le groupe constitué par *B. subtilis*, *B. amyloliquefaciens* et *B. megaterium*, chacun à une concentration finale en solution comprise entre $10^2$ et $5.10^4$ ufc/ml, au moins deux *Lactobacillus* non pathogènes sélectionnés dans le groupe constitué par *L. paracasei* et *L. rhamnosus* et au moins un *Pediococcus* non pathogène, chacun à une concentration finale en solution comprise entre $10^4$ et $5.10^8$ ufc/ml, associé à au moins un diluant nutritif soluble dans l'eau sélectionné dans le groupe constitué par des sources d'acides aminés tel qu'un extrait de levure à 0,01-0,5 % et des sucres.

Outre les dispositions qui précèdent, l'invention comprend encore d'autres dispositions, qui ressortiront de la description qui va suivre, qui se réfère à des exemples de mise en oeuvre du procédé objet de la présente invention ainsi qu'au dessin annexé, dans lequel la figure 1 illustre les différentes voies de réinfestation des animaux : (1) (alimentation), (2) (litière), (3) (biofilm) ou (4) (matériel agricole).

**EXEMPLE 1 : Mise en oeuvre du procédé selon l'invention dans le cadre de la préparation d'un bâtiment avant transfert des futurs reproducteurs : application aux volailles (procédé ① ).**

* Probiotiques systématiquement ajoutés aux aliments :

- CERNIVET® LBC ME10 : culture lyophilisée d'*Enterococcus faecium* Cemelle 68 (SF68), déposé à la National Collection of Industrial Bacteria (N.C.I.B.) de Aberdeen, Ecosse, sous le numéro 10415;
- Autres composants :

  . GABOLYSATS® Dielen : protéolysats de poissons sélectionnés composés de :

  peptides et polypeptides à haute valeur biologique,
  acides gras polyinsaturés : alpha-linolénique, omega 3 ($\bar{\omega}$3),
  complexe vitamine E et sélénium naturel ayant un pouvoir antioxydant.

  . AGSORB®: argile montmorillonite - E558, dénommé Performix® Ponte Reproducteur.

Ces probiotiques sont incorporés en continu dans l'aliment, soit $3.10^8$ ufc/kg.

* Applications sur les mars et plafonds :

- Dissoudre 1 kg du produit suivant (composition selon l'étape (a) du procédé ① ):

| | Nom | N° dépôt | Concentration (ufc/g) |
|---|---|---|---|
| *B. subtilis* | ISB02 | I-1433 | $3.10^4$ |
| | ISB09 | I-1438 | $3.10^4$ |
| *B. amyloliquefaciens* | ISB05 | I-1435 | $3.10^4$ |
| *B. megaterium* | ISB06 | I-1436 | $3.10^4$ |
| *L. rhamnosus* | ISL01 | I-1450 | $5.10^7$ |
| | ISL20 | I-1454 | $5.10^7$ |
| | ISL25 | I-1456 | $5.10^7$ |
| *L. paracasei* | ISL32 | I-1458 | $5.10^7$ |
| *L. acidophilus* | ISL44 | I-1460 | $5.10^7$ |
| *L. fermentum* | ISL102 | I-1461 | $5.10^7$ |
| *Pediococcus pentosaceus* | ICP01 | I-1654 | $5.10^7$ |

dénommé SX 12, dans 150 à 200 litres d'eau pure non déminéralisée, sans produit bactériostatique, ni chlore. (En cas de doute pour le chlore, ajouter de la poudre de lait écrémé à raison de 2,5 g par litre d'eau). Laisser agir un quart d'heure avant de réaliser la mise en suspension du SX 12.
- La solution ainsi obtenue, doit être pulvérisée sous forme d'une pluie très fine sur les surfaces à traiter : murs, plafond. Les gouttelettes doivent être suffisamment fines pour permettre leur fixation sur les surfaces traitées et éviter le ruissellement.

- La pulvérisation doit être faite de façon homogène sur l'ensemble des surfaces à traiter (y compris les caillebotis).
- Laisser sécher puis recommencer la même opération 24 heures plus tard avec le second kilo de SX 12.

* Traitement des litières :

Avant la mise en place de la litière, épandre au sol 25 g par m$^2$ d'un produit de formule suivante (selon étape (b) du procédé ① ):

| | Nom | N° dépôt | Concentration (ufc/g) |
|---|---|---|---|
| *B. subtilis* | ISB02 | I-1433 | $10^5$ |
| | ISB09 | I-1438 | $10^5$ |
| *B. amyloliquefaciens* | ISB05 | I-1435 | $10^5$ |
| *B. megaterium* | ISB06 | I-1436 | $10^5$ |
| *L. rhamnosus* | ISL01 | I-1450 | $10^6$ |
| | ISL20 | I-1454 | $10^6$ |
| | ISL25 | I-1456 | $10^6$ |
| *L. paracasei* | ISL32 | I-1458 | $10^6$ |
| *L. acidophilus* | ISL44 | I-1460 | $10^6$ |
| *L. fermentum* | ISL102 | I-1461 | $10^6$ |
| *Pediococcus pentosaceus* | ICP01 | I-1654 | $10^6$ |

dénommé SX 10.

Mettre la litière neuve en place, puis apporter sur celle-ci 25 g par m$^2$ de SX 10.

Ensuite, chaque semaine, traiter avec SX 10 à raison de 10 g par m$^2$ sur l'ensemble de la surface du bâtiment, y compris les surfaces sous caillebotis.

**EXEMPLE 2 : Mise en oeuvre du procédé selon l'invention lorsque les reproducteurs sont déjà en place : application aux volailles (procédé ③ ).**

* Probiotiques systématiquement ajoutés aux aliments :

On utilise le même produit que celui décrit à l'exemple 1.

* Applications sur les murs, plafonds et litières déjà en place :

- Dissoudre 1 kg de SX 12 tel que défini à l'exemple 1 dans 150 à 200 litres d'eau pure non déminéralisée : sans produit bactériostatique, ni chlore. (En cas de doute pour le chlore, ajouter de la poudre de lait écrémé à raison de 2,5 g par litre d'eau). Laisser agir un quart d'heure avant de réaliser la mise en suspension du SX 12.
- La solution ainsi obtenue, doit être pulvérisée sous forme d'une pluie très fine sur les surfaces à traiter : murs, plafond et surface de la litière existante. Les gouttelettes doivent être suffisamment fines pour permettre leur fixation sur les surfaces traitées et éviter le ruissellement.
- La pulvérisation doit être faite de façon homogène sur l'ensemble des surfaces à traiter (y compris les caillebotis et les litières).
- Laisser sécher puis recommencer la même opération 24 heures plus tard avec le second kilo de SX 12.

* Traitement des litières :

Traiter la surface de la litière existante avec SX 10 tel que défini à l'exemple 1, à raison de 50 g par m$^2$. Mettre

la paille fraîche en place, puis semer à nouveau SX 10 (50 g par m$^2$), soit 100 kg de SX 10 pour 1 000 m$^2$.

Ensuite, chaque semaine, traiter avec SX 10 à raison de 25 g par m$^2$ sur l'ensemble de la surface du bâtiment, y compris les surfaces sous caillebotis.

## EXEMPLE 3 : Éradication de salmonelles isolées :

(a) à partir d'une litière de poule :

    *Salmonella spp* L356 (A).

(b) en élevage de volailles :

    L356 (*Salmonella typhimurium*) (B), K530 (*Salmonella Saint Paul*), K538 (*Salmonella indiana*), I943 (*Salmonella Saint Paul*), J158 (*Salmonella Saint Paul*), J158 (*Salmonella Saint Paul*), K446 (*Salmonella typhimurium*), H661 (*Salmonella Saint Paul*), 38713 (*Salmonella enteretidis*), 38105 (*Salmonella wirchow*), 38105 (*Salmonella hadar*), 38105 (*Salmonella infantis*).

(c) à partir d'une chiffonnette :

    1555 (*Salmonella typhimurium*).

Le procédé selon l'exemple 1, et notamment la composition SX 10 inhibe le développement des salmonelles conformément au Tableau I ci-après.

Tableau I

| Souches | Diamètres d'inhibition en mm |
|---|---|
| Spp L356 (A) | 13 |
| L356 (B) | 17 |
| K530 | 12 |
| I943 | 18 |
| J158 | 21 |
| K538 | 19 |
| K446 | 20 |
| H661 | 15 |
| 38713 | 30 |
| 38105 | 30 |
| 38105 | 40 |
| 38105 | 30 |
| 1555 | 11 |

## EXEMPLE 4 : Éradication d'*E. coli* et de *Staphylococcus arthrosynoviae* isolés d'un couvoir.

| Staphylocoques | Diamètres d'inhibition en mm |
|---|---|
| *E. coli* A | 16 |
| *E. coli* B | 10 |
| *S. arthrosynoviae* | 22 |

## EXEMPLE 5 : Comparaison des résultats des prélèvements effectués lorsque le procédé selon l'exemple 1 est mis en oeuvre ou non (sur le même bâtiment).

Les échantillons A ont été prélevés dans un bâtiment de ponte, dans lequel le procédé n'a pas été mis en oeuvre, alors que les échantillons B ont été prélevés dans le même bâtiment de ponte, dans lequel le procédé selon l'invention a été mis en oeuvre.

Les résultats sont illustrés au Tableau II ci-après.

Tableau II

| Échantillons | Absence ou présence de Salmonelle | Identification par galerie API 20E | Résultat sérotypage du 9/12/96 |
|---|---|---|---|
| A1 - litière | Absence | | |
| A2 - fiente | Présence | *Salmonella spp* | *Salmonella indiana* |
| A3 - liquide* | Absence | | |
| B1 - litière | Absence | | |
| B2 - fiente | Absence | | |
| B3 - liquide* | Absence | | |

\* eau de boisson.

Il ressort de ces résultats que dans le bâtiment non traité, des salmonelles sont détectées, dans la fiente alors que lorsque le bâtiment est traité, aucune salmonelle n'est retrouvée.

**EXEMPLE 6 : Résultats des prélèvements effectués dans un bâtiment non traité (prélèvements A) et des prélèvements effectués dans un bâtiment traité (prélèvements C et D).**

Ces résultats sont illustrés au Tableau III ci-après.

## Tableau III

| Échantillons | Absence ou présence de Salmonelle | Identification par galerie API 20E | Résultat sérotypage du 9/12/96 |
|---|---|---|---|
| A1 - chiffonnette | Présence | *Salmonella spp* | *Salmonella infantis* |
| A2 - chiffonnette | Présence | idem | |
| A3 - chiffonnette | Présence | idem | |
| A4 - chiffonnette | Présence | idem | |
| A5 - chiffonnette | Présence | idem | |
| A6 - fiente | Présence | idem | |
| A7 - litière | Présence | idem | |
| A8 - litière | Présence | idem | |

## Tableau III (suite)

| Échantillons | Absence ou présence de Salmonelle | Identification par galerie API 20E |
|---|---|---|
| C1 - litière | Absence | |
| C2 - fiente | Absence | |
| C3 - liquide | Absence | |
| C4 - chiffonnette | Absence | |
| D1 - litière | Absence | |
| D2 - fiente | Absence | |
| D3 - liquide | Absence | |
| D4 - chiffonnette | Absence | |

**EXEMPLE 7 : Résultats des prélèvements effectués lorsque le traitement ne comprend pas les étapes (a) et (c) dans le procédé selon l'invention.**

Les prélèvements B1 (chiffonnette) contiennent des Salmonelles, comme illustré au Tableau IV ci-après.

### Tableau IV

| Échantillons | Absence ou présence de Salmonelle | Identification par galerie API 20E | Résultat sérotypage du 9/12/96 |
|---|---|---|---|
| B1 - chiffonnette | Présence | *Salmonella spp* | *Salmonella typhimurium* |
| B2 - litière de surface | Absence | | |
| B3 - fiente de profondeur | Absence | | |

**EXEMPLE 8 : Mise en évidence d'une réinfestation par le matériel agricole lorsque l'étape (c) n'est pas mise en oeuvre.**

### Tableau V

| Échantillons | Absence ou présence de Salmonelle | Identification par galerie API 20E |
|---|---|---|
| Batîment 1 | | |
| fiente | absence | |

Tableau V   (suite)

| Échantillons | Absence ou présence de Salmonelle | Identification par galerie API 20E |
|---|---|---|
| Batîment 1 | | |
| liquide | absence | |
| chiffonnette | présence | *Salmonella spp* (code :6704752) |
| litière | absence | |
| Bâtiment 2 | | |
| fiente | absence | |
| liquide | absence | |
| chiffonnette | absence | |
| litière | présence | |

**EXEMPLE 9 : Mise en oeuvre du procédé selon l'invention en élevage porcin.**

- solution mise en oeuvre à l'étape (a) : identique au produit SX 12 décrit à l'exemple 1.
- composition mise en oeuvre à l'étape (b) :

| | Nom | N° dépôt | Concentration (ufc/g) |
|---|---|---|---|
| *B. subtilis* | ISB02 | I-1433 | $10^4$ |
| | ISB09 | I-1438 | $10^4$ |
| *B. amyloliquefaciens* | ISB05 | I-1435 | $10^4$ |
| *B. megaterium* | ISB06 | I-1436 | $10^4$ |
| *L. rhamnosus* | ISL20 | I-1454 | $5.10^4$ |
| *L. paracasei* | ISL32 | I-1458 | $5.10^4$ |
| *L. acidophilus* | ISL44 | I-1460 | $5.10^4$ |
| *L. fermentum* | ISL102 | I-1461 | $5.10^4$ |
| *Pediococcus pentosaceus* | ICP01 | I-1654 | $5.10^4$ |

Diluants :Lactose et Argile ADL®.
Support : Calseagrit

- composition mise en oeuvre à l'étape (c) (nettoyage du matériel maximum 2 heures avant chaque utilisation) :

|  | Nom | N° dépôt | Concentration (ufc/g) |
|---|---|---|---|
| *B. subtilis* | ISB02 | I-1433 | $10^4$ |
|  | ISB09 | I-1438 | $10^4$ |
| *B. amyloliquefaciens* | ISB05 | I-1435 | $10^4$ |
| *B. megaterium* | ISB06 | I-1436 | $10^4$ |
| *L. rhamnosus* | ISL01 | I-1450 | $2.10^7$ |
|  | ISL20 | I-1454 | $2.10^7$ |
|  | ISL25 | I-1456 | $2.10^7$ |
| *L. paracasei* | ISL32 | I-1458 | $2.10^7$ |
| *L. acidophilus* | ISL44 | I-1460 | $2.10^7$ |
| *L. fermentum* | ISL102 | I-1461 | $2.10^7$ |
| *Pediococcus pentosaceus* | ICP01 | I-1654 | $2.10^7$ |

Diluant nutritif :
Extrait de levure (code 1104C0/106) Bio Springer : 0,1 % et
Lactose alimentaire - QSP : 100 %

**EXEMPLE 10 : Mise en oeuvre du procédé dans un couvoir (procédé ② ).**

On pulvérise les murs, les plafonds et les sols, selon les conditions définies à l'exemple 2.
Le matériel est nettoyé avec une composition telle que définie à l'exemple 9, à chaque opération.

**EXEMPLE 11 : Exemple de composition pour le traitement des lisiers de volailles (composition selon l'étape (b) procédé ① ou ③ ).**

|  | Nom | N° dépôt | Concentration (ufc/g) |
|---|---|---|---|
| *B. subtilis* | ISB02 | I-1433 | $5.10^4$ |
|  | ISB09 | I-1438 | $5.10^4$ |
| *B. amyloliquefaciens* | ISB05 | I-1435 | $5.10^4$ |
| *B. megaterium* | ISB06 | I-1436 | $5.10^4$ |
| *L. rhamnosus* | ISL01 | I-1450 | $5.10^4$ |
|  | ISL20 | I-1454 | $5.10^4$ |
|  | ISL25 | I-1456 | $5.10^4$ |
| *L. paracasei* | ISL32 | I-1458 | $5.10^4$ |
| *L. acidophilus* | ISL44 | I-1460 | $5.10^4$ |
| *L. fermentum* | ISL102 | I-1461 | $5.10^4$ |
| *Pediococcus pentosaceus* | ICP01 | I-1654 | $5.10^4$ |

Diluants : Lactose et Argile ADL®
Support : Calseagrit

**Revendications**

1. Procédé préventif, pour l'éradication systématique du portage d'agents pathogènes par des animaux, avant le transport ou la mise en place des animaux dans des bâtiments convenables, **caractérisé en ce qu'**il comprend :

   (a) la pulvérisation des parois et des plafonds des bâtiments, de façon homogène, avec une solution aqueuse essentiellement constituée d'un complexe bactérien comprenant essentiellement au moins deux *Bacillus* non pathogènes sélectionnés dans le groupe constitué par *B. subtilis*, *B. amyloliquefaciens* et *B. megaterium*, chacun à une concentration comprise entre $10^2$ et $5.10^4$ ufc/ml, au moins deux *Lactobacillus* non pathogènes sélectionnés dans le groupe constitué par *L. paracasei* et *L. rhamnosus* et au moins un *Pediococcus* non pathogène, chacun à une concentration comprise entre $10^4$ et $5.10^8$ ufc/ml, de manière préférée entre $5.10^5$ et $5.10^8$ ufc/ml, de manière encore plus préférée $5.10^7$ ufc/ml, lequel complexe bactérien est associé à au moins un diluant nutritif convenable soluble dans l'eau, conformément au programme de pulvérisation suivant :

   - première pulvérisation au moment de la préparation des bâtiments pour la réception des animaux,
   - éventuellement deuxième pulvérisation entre 12 heures et 48 heures après la première pulvérisation,
   - et éventuellement troisième pulvérisation, environ 7 jours plus tard, ledit programme de pulvérisation étant répété à la mise en place de chaque nouvelle bande,

   (b) l'épandage sur les sols des bâtiments, de façon homogène, avec une composition sous forme solide, de type poudre ou granules, comprenant (i) un complexe bactérien constitué essentiellement d'au moins un *B. subtilis* et d'au moins un autre *Bacillus* non pathogène, sélectionné dans le groupe constitué par *B. amyloliquefaciens*, *B. megaterium, B. licheniformis et B. circulans*, chacun à une concentration comprise entre $10^3$ et $10^6$ ufc/g, d'au moins un *Lactobacillus* non pathogène sélectionné dans le groupe constitué par *L. paracasei, L. rhamnosus. L. fermentum* et *L. acidophilus* et d'au moins un *Pediococcus* non pathogène, chacun à une concentration comprise entre $10^3$ et $10^8$ ufc/g, (ii) au moins un diluant nutritif, (iii) au moins un diluant présentant des propriétés électrostatiques et (iv) au moins un support fixateur de microparticules, le rapport complexe bactérien + diluants:support étant compris entre 2:98 et 15:85, de préférence 5:95 (en %, p/p), conformément au programme d'épandage suivant :

   - premier épandage sur les sols des bâtiments, avant la mise en place des litières ou des lisiers,
   - mise en place des litières, s'il y a lieu, suivie d'un deuxième épandage sur lesdites litières,
   - puis, après mise en place des animaux, épandage sur l'ensemble du sol, des litières ou des lisiers, une fois par semaine ; et

   (c) pulvérisation, si nécessaire, du matériel utilisé dans lesdits bâtiments, avec une solution comprenant un complexe bactérien constitué essentiellement d'au moins deux *Bacillus* non pathogènes sélectionnés dans le groupe constitué par *B. subtilis*, *B. amyloliquefaciens* et *B. megaterium*, chacun à une concentration comprise entre $10^2$ et $5.10^4$ ufc/ml, d'au moins deux *Lactobacillus* non pathogènes sélectionnés dans le groupe constitué par *L. paracasei* et *L. rhamnosus* et d'au moins un *Pediococcus* non pathogène, chacun à une concentration comprise entre $10^4$ et $5.10^8$ ufc/ml, de préférence à une concentration de $10^6$ ufc/ml ou de $5.10^7$ ufc/ml, associé à au moins un diluant nutritif soluble dans l'eau sélectionné dans le groupe constitué par des sources d'acides aminés tel qu'un extrait de levure à 0,01-0,5 % et des sucres et
   (d) dès la mise en place du troupeau, l'ajout systématique à l'alimentation dudit troupeau de produits probiotiques.

2. Procédé préventif pour l'éradication systématique du portage d'agents pathogènes par des animaux dans des bâtiments ne comportant ni litières, ni lisiers, **caractérisé en ce qu'**il comprend :

   (a) la pulvérisation des parois, des plafonds et des sols des bâtiments, de façon homogène, avec une solution aqueuse telle que définie à l'étape (a) selon la revendication 1, conformément au programme de pulvérisation suivant :

   - première pulvérisation au moment de la préparation des bâtiments pour la réception des animaux,
   - éventuellement deuxième pulvérisation entre 12 et 48 heures après la première pulvérisation,

   ledit programme de pulvérisation étant répété lors du remplacement des animaux ou à la mise en place de chaque nouvelle bande et

(b') pulvérisation systématique du matériel utilisé dans lesdits bâtiments avant et/ou après chaque opération, avec une solution comprenant un complexe bactérien constitué essentiellement d'au moins deux *Bacillus* non pathogènes sélectionnés dans le groupe constitué par *B. subtilis*, *B. amyloliquefaciens* et *B. megaterium*, chacun à une concentration comprise entre $2.10^2$ et $10^5$ ufc/ml, d'au moins deux *Lactobacillus* non pathogènes sélectionnés dans le groupe constitué par *L. paracasei* et *L. rhamnosus* et d'au moins un *Pediococcus* non pathogène, chacun à une concentration comprise entre $10^4$ et $5.10^8$ ufc/ml, de préférence à une concentration de $10^6$ ufc/ml, associé à au moins un diluant nutritif soluble dans l'eau sélectionné dans le groupe constitué par des sources d'acides aminés tel qu'un extrait de levure à 0,01-0,5 % et des sucres.

3. Procédé pour l'éradication systématique du portage d'agents pathogènes par des animaux, lorsque les animaux sont déjà en place dans des bâtiments convenables, **caractérisé en ce qu'**il comprend :

(a) la pulvérisation des parois et des plafonds des bâtiments ainsi que des litières ou des lisiers, de façon homogène, avec une solution aqueuse telle que définie à l'étape (a) selon la revendication 1, conformément au programme de pulvérisation suivant :

- première pulvérisation au début du traitement,
- éventuellement deuxième pulvérisation 12 heures à 48 heures après la première pulvérisation,
- et éventuellement troisième pulvérisation, environ 7 jours plus tard,

(b) l'épandage sur les litières ou les lisiers en place, de façon homogène, d'une composition sous forme solide, de type poudre ou granules, telle que définie à l'étape (b) du procédé selon la revendication 1, conformément au programme d'épandage suivant :

- premier épandage sur les litières ou les lisiers en place et pour les litières uniquement, mise en place d'une paille fraîche et deuxième épandage,
- puis une fois par semaine, épandage sur les sols, les litières ou les lisiers, et

(c) pulvérisation, si nécessaire, du matériel utilisé dans lesdits bâtiments, avec une solution telle que définie à l'étape (c) du procédé selon la revendication 1 et
(d) ajout systématique à l'alimentation dudit troupeau de produits probiotiques.

4. Procédé selon l'une quelconque des revendications 1 à 3, **caractérisé en ce que** les solutions mises en oeuvre à l'étape (a) comprennent un complexe bactérien constitué de deux *B. subtilis*, d'un *B. amyloliquefaciens* et d'un *B. megaterium*, chacun à une concentration de $10^2$-$3.10^4$ ufc/ml, d'au moins trois *Lactobacillus*, parmi lesquels au moins un *L. rhamnosus* et un *L. paracasei*, les autres *Lactobacillus* présents dans ladite solution étant sélectionnés dans le groupe constitué par *L. rhamnosus*, *L. paracasei, L. acidophilus, L. fermentum* et d'un *Pediococcus pentosaceus*, chacun à une concentration comprise entre $10^4$ et $5.10^7$ ufc/ml, de préférence entre $5.10^5$ et $5.10^7$ ufc/ml.

5. Procédé selon la revendication 4, **caractérisé en ce que** lesdites solutions de l'étape (a) comprennent deux *B. subtilis*, un *B. amyloliquefaciens*, un *B. megaterium*, chacun à une concentration de $3.10^4$ ufc/ml, deux ou trois *L. rhamnosus*, un *L. paracasei*, un *L. acidophilus*, un *Pediococcus pentosaceus* et éventuellement un *L. fermentum*, chacun à une concentration de $5.10^7$ ufc/ml.

6. Procédé selon l'une quelconque des revendications 1 à 5, **caractérisé en ce que** les solutions mises en oeuvre à l'étape (a) sont à une concentration en complexe bactérien de 0,5 à 2 % (p/v).

7. Procédé selon l'une quelconque des revendications 1 à 6, **caractérisé en ce que** les solutions mises en oeuvre à l'étape (a) sont pulvérisées à raison de 10-100 ml/m$^2$.

8. Procédé selon l'une quelconque des revendications 1 et 3 à 7, **caractérisé en ce que** les compositions solides mises en oeuvre à l'étape (b), pour le traitement des litières, comprennent, comme complexes bactériens :

\* pour les volailles : deux *B. subtilis*, un *B. amyloliquefaciens*, et un *B. megaterium*, chacun à une concentration de $5.10^3$-$10^5$ ufc/g, de préférence d'au moins $10^4$ ufc/g, au moins trois *Lactobacillus*, parmi lesquels au moins un *L. rhamnosus* et un *L. paracasei*, les autres *Lactobacillus* présents dans ladite composition étant sélectionnés dans le groupe constitué par *L. rhamnosus*, *L. paracasei*, *L. acidophilus*, *L. fermentum* et un *Pediococcus pentosaceus,* chacun à une concentration comprise entre $10^4$ et $10^6$ ufc/g, de préférence $5.10^4$ ufc/

g ; et

* pour les ruminants, les équidés et les porcs : les quatre *Bacillus* suivants : deux *B. subtilis*, un *B. amyloliquefaciens* et un *B. megaterium*, chacun à une concentration comprise entre $10^3$ et $10^5$ ufc/g, de préférence $10^4$ ufc/g et les cinq *Lactobacillus* suivants : deux *L. rhamnosus*, un *L. paracasei*, un *L. acidophilus*, un *L. fermentum*, chacun à une concentration comprise entre $10^3$ et $10^6$ ufc/g, de préférence $5.10^4$ ufc/g.

9. Procédé selon l'une quelconque des revendications 1 et 3 à 7, **caractérisé en ce que** les compositions solides mises en oeuvre à l'étape (b), pour le traitement des lisiers comprennent, comme complexes bactériens :

* pour les volailles : les quatre *Bacillus* suivants : deux *B. subtilis*, un *B. amyloliquefaciens* et un *B. megaterium*, chacun à une concentration de $5.10^3$-$10^6$ ufc/g, de préférence $5.10^4$ ufc/g, les six *Lactobacillus* suivants : trois *L. rhamnosus*, un *L. paracasei*, un *L. acidophilus*, un *L. fermentum* et un *Pediococcus pentosaceus*, chacun à une concentration comprise entre $5.10^3$ et $10^6$ ufc/g, de préférence $5.10^4$ ufc/g ; et
* pour les ruminants, les équidés et les porcs : les quatre *Bacillus* suivants : deux *B. subtilis*, un *B. amyloliquefaciens*, *B. megaterium*, chacun à une concentration comprise entre $10^3$-$5.10^5$ ufc/g, de préférence $10^4$ ufc/g, les quatre *Lactobacillus* suivants : un *L. rhamnosus*, un *L. paracasei*, un *L. acidophilus* et un *L. fermentum* et un *Pediococcus pentosaceus*, chacun à une concentration comprise entre $10^3$ et $10^6$ ufc/g, de préférence $5.10^4$ ufc/g.

10. Procédé selon l'une quelconque des revendications 1 et 3 à 9, **caractérisé en ce que** les compositions mises en oeuvre à l'étape (b) sont répandues à raison de 10 à 100 g/m$^2$.

11. Procédé selon l'une quelconque des revendications 1 à 10, **caractérisé en ce que** les solutions mises en oeuvres à l'étape (c) ou à l'étape (b') comprennent, comme diluant nutritif, un extrait de levure à 0,01 % à 0,5 %, de préférence à 0,1 % et un sucre.

12. Procédé selon l'une quelconque des revendications 1 à 11, **caractérisé en ce que** les agents pathogènes préférentiellement éradiqués sont les salmonelles, *listeria*, les coliformes, *clostridium* et les staphylocoques.

13. Solutions aqueuses de complexes bactériens aptes à être mises en oeuvre dans un procédé selon l'une quelconque des revendications 1 à 12, **caractérisées en ce qu'**elles sont sélectionnées dans le groupe constitué par :

- des solutions aqueuses mises en oeuvre à l'étape (a) du procédé selon l'une quelconque des revendications 1 à 12, comprenant un complexe bactérien constitué de deux *B. subtilis*, d'un *B. amyloliquefaciens* et d'un *B. megaterium*, chacun à une concentration de $10^2$-$5.10^4$ ufc/ml, de préférence à une concentration de $3.10^4$ ufc/ml, d'au moins trois *Lactobacillus*, parmi lesquels au moins un *L. rhamnosus* et un *L. paracasei*, les autres *Lactobacillus* présents dans ladite solution étant sélectionnés dans le groupe constitué par *L. rhamnosus*, *L. paracasei*, *L. acidophilus*, *L. fermentum* et *un Pediococcus pentosaceus*, chacun à une concentration comprise entre $10^4$ et $5.10^8$ ufc/ml, de manière préférée entre $5.10^5$ et $5.10^8$ ufc/ml, de manière encore plus préférée $5.10^7$ ufc/ml, associé à au moins un diluant nutritif convenable soluble dans l'eau.
- des solutions aqueuses mises en oeuvre à l'étape (c) du procédé selon l'une quelconque des revendications 1 à 12, qui comprennent les mêmes complexes bactériens aux mêmes concentrations que pour les solutions aqueuses mises en oeuvre à l'étape (a) selon la revendication 1, associés à au moins un diluant nutritif soluble dans l'eau sélectionné dans le groupe constitué par des sources d'acides aminés tel qu'un extrait de levure à 0,01-0,5 % et des sucres.
- des solutions aqueuses mises en oeuvre à l'étape (b') du procédé selon la revendication 2, qui comprennent un complexe bactérien constitué de deux *B. subtilis*, d'un *B. amyloliquefaciens* et d'un *B. megaterium*, chacun à une concentration comprise entre $2.10^2$ et $10^5$ ufc/ml, de préférence $5.10^2$ ufc/ml, d'au moins trois *Lactobacillus*, parmi lesquels au moins un *L. rhamnosus* et un *L. paracasei*, les autres *Lactobacillus* présents dans ladite solution étant sélectionnés dans le groupe constitué par *L. rhamnosus*, *L. paracasei*, *L. acidophilus*, *L. fermentum* et un *Pediococcus pentosaceus*, chacun à une concentration comprise entre $10^4$ et $5.10^8$ ufc/ml, de préférence $10^6$ ufc/ml et, comme diluant nutritif, un mélange comprenant un extrait de levure à 0,01-0,5 % et un sucre.

14. Compositions solides à base de complexes bactériens, **caractérisées en ce qu'**elles sont aptes à être mises en oeuvre à l'étape (b) des procédés selon l'une quelconque des revendications 1 et 3 à 12 et à intervenir dans l'éradication du portage d'agents pathogènes par des animaux et **en ce qu'**elles sont sélectionnées dans le groupe constitué par :

- des compositions de traitement « litières de volailles » comprenant deux *B. subtilis*, un *B. amyloliquefaciens* et un *B. megaterium* tels que définis ci-dessus, chacun à une concentration de $5.10^3$-$10^5$ ufc/g, de préférence d'au moins $10^4$ ufc/g, au moins trois *Lactobacillus*, parmi lesquels au moins un *L. rhamnosus* et un *L. paracasei*, les autres *Lactobacillus* présents dans ladite composition étant sélectionnés dans le groupe constitué par *L. rhamnosus*, *L. paracasei*, *L. acidophilus*, *L. fermentium* et un *Pediococcus pentosaceus*, chacun à une concentration comprise entre $10^4$ et $10^6$ ufc/g, de préférence $5.10^4$ ufc/g ;

- des compositions de traitement « litières de ruminants, de porcs ou d'équidés » comprenant les quatre *Bacillus* suivants : deux *B. subtilis*, un *B. amyloliquefaciens*, *B. megaterium*, chacun à une concentration comprise entre $10^3$ et $10^5$ ufc/g, de préférence à une concentration de $10^4$ ufc/g et les cinq *Lactobacillus* suivants : deux *L. rhamnosus*, un *L. paracasei*, un *L. acidophilus*, un *L. fermentum*, chacun à une concentration comprise entre $10^3$ et $10^6$ ufc/g, de préférence $5.10^4$ ufc/g ;

- des compositions de traitement « lisiers de volailles » comprenant les quatre *Bacillus* suivants : deux *B. subtilis*, un *B. amyloliquefaciens* et un *B. megaterium*, chacun à une concentration de $5.10^3$-$10^6$ ufc/g, de préférence $5.10^4$ ufc/g, les six *Lactobacillus* suivants : trois *L. rhamnosus*, un *L. paracasei*, un *L. acidophilus*, un *L. fermentum* et un *Pediococcus pentosaceus*, chacun à une concentration comprise entre $5.10^3$ et $10^6$ ufc/g, de préférence $5.10^4$ ufc/g ;

- des compositions de traitement « lisiers de ruminants, d'équidés et de porcs » comprenant les quatre *Bacillus* suivants : deux *B. subtilis*, un *B. amyloliquefaciens*, un *B. megaterium* tels que définis ci-dessus, chacun à une concentration comprise entre $10^3$-$5.10^5$ ufc/g, de préférence $10^4$ ufc/g, les quatre *Lactobacillus* suivants : un *L. rhamnosus*, un *L. paracasei*, un *L. acidophilus* et un *L. fermentum* et un *Pediococcus pentosaceus*, chacun à une concentration comprise entre $10^3$ et $10^6$ ufc/g, de préférence $5.10^4$ ufc/g ;

lesdites compositions solides comprenant en outre au moins un diluant nutritif, au moins un diluant ayant des propriétés électrostatiques et au moins un support fixateur de microparticules, le rapport complexe bactérien + diluants:support étant compris entre 2:98 et 15:85, de préférence 5:95 (en %, p/p).

15. Utilisation de solutions aqueuses de complexes bactériens telles que définies dans la revendication 13, dans la pulvérisation des parois, des plafonds et des sols des bâtiments, ainsi que dans la pulvérisation du matériel utilisé dans lesdits bâtiments, pour l'éradication systématique du portage d'agents pathogènes par des animaux.

16. Utilisation de compositions solides de complexes bactériens telles que définies dans la revendication 14, dans l'épandage sur les sols, les litières ou les lisiers utilisés par les animaux, pour l'éradication systémique du portage d'agents pathogènes par lesdits animaux.

17. Coffret d'éradication systématique du portage d'agents pathogènes par des animaux, **caractérisé en ce qu'**il comprend les différents types de compositions suivantes :

a) une composition essentiellement constituée d'un complexe bactérien, sous la forme de poudre et prêt à être mis en solution dans de l'eau, pour le traitement des murs et plafonds d'un bâtiment et éventuellement des sols, des litières ou des lisiers, comprenant essentiellement au moins deux *Bacillus* non pathogènes sélectionnés dans le groupe constitué par *B. subtilis*, *B. amyloliquefaciens* et *B. megaterium*, chacun à une concentration finale en solution comprise entre $10^2$ et $5.10^4$ ufc/ml, au moins deux *Lactobacillus* non pathogènes sélectionnés dans le groupe constitué par *L. paracasei* et *L. rhamnosus* et au moins un *Pediococcus* non pathogène, chacun à une concentration finale en solution comprise entre $10^4$ et $5.10^8$ ufc/ml, associé à au moins un diluant nutritif convenable soluble dans l'eau ;
b) une composition sous la forme de poudre ou granules, pour le traitement des sols et des litières comprenant (i) un complexe bactérien constitué essentiellement d'au moins *B. subtilis* et d'au moins un autre *Bacillus* non pathogène, sélectionné dans le groupe constitué par *B. amyloliquefaciens*, *B*. megaterium, *B. licheniformis et B. circulans*, chacun à une concentration finale comprise entre $10^3$ et $10^6$ ufc/g, d'au moins un *Lactobacillus* non pathogène sélectionné dans le groupe constitué par *L. paracasei*, *L. rhamnosus*, *L. fermentum* et *L. acidophilus* et d'au moins un *Pediococcus* non pathogène, chacun à une concentration finale comprise entre $10^3$ et $10^8$ ufc/g, (ii) au moins un diluant nutritif, (iii) au moins un diluant présentant des propriétés électrostatiques et (iv) au moins un support fixateur de microparticules ; et
c) une composition comprenant essentiellement un complexe bactérien, sous la forme de poudre et prêt à être mis en solution dans de l'eau, pour le traitement du matériel, comprenant essentiellement au moins deux *Bacillus* non pathogènes sélectionnés dans le groupe constitué par *B. subtilis*, *B. amyloliquefaciens* et *B. megaterium*, à une concentration finale en solution comprise entre $10^2$ et $5.10^4$ ufc/ml, au moins deux *Lactobacillus* non pathogènes sélectionnés dans le groupe constitué par *L. paracasei* et *L. rhamnosus* et au moins un *Pediococcus* non pathogène, chacun à une concentration finale en solution comprise entre $10^4$ et $5.10^8$ ufc/ml, associé à au moins un diluant nutritif soluble dans l'eau sélectionné dans le groupe constitué par des sources d'acides aminés tel qu'un extrait de levure à 0,01-0,5 % et des sucres.

**18.** Compositions selon l'une quelconque des revendications 13 à 18, **caractérisées en ce que** les différents *Bacillus* et *Lactobacillus* sont sélectionnés parmi les souches suivantes :

* souches de *Bacillus*, déposées auprès de la Collection Nationale de Cultures de Micro-organismes (CNCM), en date du 8 juin 1994, pour ce qui concerne *Bacillus subtilis*, sous les numéros I-1433, I-1438 et I-1440, pour ce qui concerne *Bacillus amyloliquefaciens*, sous les numéros I-1434 et I-1435, pour ce qui concerne *Bacillus megaterium*, sous le numéro I-1436, pour ce qui concerne *Bacillus licheniformis* sous le numéro I-1437 et pour ce qui concerne *Bacillus circulans*, sous le numéro I-1439;
* souches de *Lactobacillus*, déposées auprès de la Collection Nationale de Cultures de Micro-organismes (CNCM), en date du 28 juillet 1994, pour ce qui concerne *Lactobacillus rhamnosus* sous les numéros I-1450, I-1452, I-1453, I-1454, I-1455, I-1456, I-1459, pour ce qui concerne *Lactobacillus paracasei*, sous les numéros I-1451, I-1457 et I-1458, pour ce qui concerne *Lactobacillus acidophilus*, sous le numéro I-1460 et pour ce qui concerne *Lactobacillus fermentum*, sous le numéro I-1461 ;
* souche de *Pediococcus pentosaceus*, déposée auprès de la Collection Nationale de Cultures de Micro-organismes (CNCM), en date du 22 décembre 1995, sous le numéro I-1654.

**Claims**

**1.** Preventative process for systematically eradicating the carrying of pathogenic agents by animals, before the transportation or housing of the animals in suitable buildings, **characterised in that** it comprises:

(a) homogeneously spraying the walls and ceilings of the buildings with an aqueous solution essentially consisting of a bacterial complex essentially comprising at least two non-pathogenic *Bacilli* selected from among *B. subtilis*, *B. amyloliquefaciens* and *B. megaterium,* each in a concentration of between $10^2$ and $5.10^4$ cfu/ml, at least two non-pathogenic *Lactobacilli* selected from among *L. paracasei* and *L. rhamnosus* and at least one non-pathogenic *Pediococcus,* each in a concentration of between $10^4$ and $5.10^8$ cfu/ml, preferably between $5.10^5$ and $5.10^8$ cfu/ml, even more preferably $5.10^7$ cfu/ml, said bacterial complex is combined with at least one suitable water-soluble nutrient diluent, in accordance with the following spraying programme:

- first spraying at the time of preparing the buildings to receive the animals,
- optionally second spraying between 12 and 48 hours after the first spraying,
- and optionally third spraying about 7 days later, said spraying programme being repeated each time a new group of animals is installed,

(b) homogeneously spreading a composition in solid form of a powder or granule type over the floors of the buildings, said composition comprising (i) a bacterial complex consisting essentially of at least one *B. subtilis* and at least one other non-pathogenic *Bacillus* selected from among *B. amyloliquefaciens*, *B. megaterium, B. licheniformis* and *B. circulans,* each in a concentration of between $10^3$ and $10^6$ cfu/g, at least one non-pathogenic *Lactobacillus* selected from among *L. paracasei, L. rhamnosus, L. fermentum* and *L. acidophilus* and at least one non-pathogenic *Pediococcus*, each in a concentration of between $10^3$ and $10^8$ cfu/g, (ii) at least one nutrient diluent, (iii) at least one diluent having electrostatic properties and (iv) at least one microparticle fixing support, the ratio of bacterial complex plus diluents to support being between 2:98 and 15:85, preferably 5:95 (in % by weight), in accordance with the following spreading programme:

- first spreading over the floors of the buildings before the litter or liquid manure is put in,
- placing the litter on the floor, if required, followed by a second spreading over said litter,
- then, after the animals have been installed, spreading the composition over the entire floor, litter or liquid manure, once a week; and

(c) if necessary spraying the equipment used in said buildings with a solution containing a bacterial complex consisting essentially of at least two non-pathogenic *Bacilli* selected from among *B. subtilis*, *B. amyloliquefaciens* and *B. megaterium,* each in a concentration of between $10^2$ and $5.10^4$ cfu/ml, at least two non-pathogenic *Lactobacilli* selected from among *L. paracasei and L. rhamnosus* and at least one non-pathogenic *Pediococ-*

*cus,* each in a concentration of between $10^4$ and $5.10^8$ cfu/ml, preferably in a concentration of $10^6$ cfu/ml or $5.10^7$ cfu/ml, combined with at least one water-soluble nutrient diluent selected from among the amino acid sources such as 0.01-0.5% yeast extract and sugars and

(d) as soon as the herd has been installed, systematically adding probiotic products to the feed for said herd.

2.  Preventative process for systemically eradicating the carrying of pathogenic agents by animals in buildings having neither litters nor liquid manure, **characterised in that** it comprises:

    (a) homogeneously spraying the walls, ceilings and floors of the buildings with an aqueous solution as defined in step (a) according to claim 1, in accordance with the following spraying programme:

    -   first spraying at the time of preparing the buildings to receive the animals,
    -   optionally second spraying between 12 and 48 hours after the first spraying,
            said spraying programme being repeated when the animals are replaced or when each new group
        is installed and

    (b') systematic spraying of the equipment used in said buildings before and/or after each operation, with a solution containing a bacterial complex consisting essentially of two non-pathogenic *Bacilli* selected from among *B. subtilis*, *B. amyloliquefaciens* and *B. megaterium,* each in a concentration of between $2.10^2$ and $10^5$ cfu/ml, at least two non-pathogenic *Lactobacilli* selected from among *L. paracasei and L. rhamnosus* and at least one non-pathogenic *Pediococcus,* each in a concentration of between $10^4$ and $5.10^8$ cfu/ml, preferably in a concentration of $10^6$ cfu/ml, combined with at least one water-soluble nutrient diluent selected from the amino acid sources such as 0.01-0.5% yeast extract and sugars.

3.  Process for systematically eradicating the carrying of pathogenic agents by animals when the animals are already in place in suitable buildings, **characterised in that** it comprises:

    (a) homogeneously spraying the walls and ceilings of the buildings and the litter or liquid manure with an aqueous solution as defined in step (a) according to claim 1, in accordance with the following spraying programme:

    -   first spraying at the start of treatment,
    -   optionally second spraying 12 to 48 hours after the first spraying,

         and optionally third spraying about 7 days later,
    (b) homogeneously spreading a composition in solid form, of powder or granule type, as defined in step (b) of the process according to claim 1, over the existing litter or liquid manure, in accordance with the following spreading programme:

    -   first spreading over the existing litter or liquid manure and, for the litter only, placing fresh straw and a second spreading,
    -   then once a week, spreading over the floors, litter or liquid manure, and

    (c) if necessary spraying the equipment used in said buildings with a solution as defined in step (c) of the process according to claim 1, and
    (d) systematically adding probiotic products to the feed for said herd.

4.  Process according to any one of claims 1 to 3, **characterised in that** the solutions used in step (a) comprise a bacterial complex consisting of two *B. subtilis,* a *B. amyloliquefaciens* and a *B. megaterium*, each in a concentration of $10^2$-$3.10^4$ cfu/ml, at least three *Lactobacilli,* including at least one *L. rhamnosus* and one *L. paracasei,* the other *Lactobacilli* present in said solution being selected from among *L. rhamnosus*, *L. paracasei*, *L. acidophilus, L. fermentum* and a *Pediococcus pentosaceus*, each in a concentration of between $10^4$ and $5.10^7$ cfu/ml, preferably between $5.10^5$ and $5.10^7$ cfu/ml.

5.  Process according to claim 4, **characterised in that** said solutions in step (a) comprise two *B. subtilis*, one *B. amyloliquefaciens*, one *B. megaterium*, each in a concentration of $3.10^4$ cfu/ml, two or three *L. rhamnosus*, one *L. paracasei*, one *L. acidophilus*, one *Pediococcus pentosaceus* and optionally one *L. fermentum*, each in a concentration of $5.10^7$ cfu/ml.

6. Process according to any one of claims 1 to 5, **characterised in that** the solutions used in step (a) have a bacterial complex concentration of 0.5-2% (w/v).

7. Process according to any one of claims 1 to 6, **characterised in that** the solutions used in step (a) are sprayed in an amount of 10-100 ml/m$^2$.

8. Process according to any one of claims 1 and 3 to 7, **characterised in that** the solid compositions used in step (b) for the treatment of litters contain, as bacterial complexes:

   * for poultry: two *B. subtilis*, one *B. amyloliquefaciens,* and one *B. megaterium,* each in a concentration of $5.10^3$-$10^5$ cfu/g, preferably at least $10^4$ cfu/g, at least three *Lactobacilli,* including at least one *L. rhamnosus* and one *L. paracasei*, the other *Lactobacilli* present in said composition being selected from the group consisting of *L. rhamnosus*, *L. paracasei, L. acidophilus, L. fermentum* and one *Pediococcus pentosaceus,* each in a concentration of between $10^4$ and $10^6$ cfu/g, preferably $5.10^4$ cfu/g; and
   * for ruminants, horses and pigs: the following four *Bacilli:* two *B. subtilis,* one *B. amyloliquefaciens*, and one *B. megaterium,* each in a concentration of between $10^3$ and $10^5$ cfu/g, preferably $10^4$ cfu/g, and the following five *Lactobacilli:* two *L. rhamnosus,* one *L. paracasei*, one *L. acidophilus,* one *L. fermentum*, each in a concentration of between $10^2$ and $10^6$ cfu/g, preferably $5.10^4$ cfu/g.

9. Process according to any one of claims 1 and 3 to 7, **characterised in that** the solid compositions used in step (b) for the treatment of liquid manure contain, as bacterial complexes:

   * for poultry: the following four *Bacilli,* two *B. subtilis,* one *B. amyloliquefaciens*, and one *B. megaterium,* each in a concentration of $5.10^3$-$10^6$ cfu/g, preferably $5.10^4$ cfu/g, the following six *Lactobacilli*: three *L. rhamnosus,* one *L. paracasei*, one *L. acidophilus,* one *L. fermentum* and one *Pediococcus pentosaceus,* each in a concentration of between $5.10^3$ and $10^6$ cfu/g, preferably $5.10^4$ cfu/g; and
   * for ruminants, horses and pigs: the following four *Bacilli:* two *B. subtilis,* one *B. amyloliquefaciens*, *B. megaterium,* each in a concentration of between $10^3$-$5.10^5$ cfu/g, preferably $10^4$ cfu/g, the following four *Lactobacilli:* one *L. rhamnosus,* one *L. paracasei*, one *L. acidophilus* and one *L. fermentum* and one *Pediococcus pentosaceus,* each in a concentration of between $10^3$ and $10^6$ cfu/g, preferably $5.10^4$ cfu/g.

10. Process according to any one of claims 1 and 3 to 9, **characterised in that** the compositions used in step (b) are spread in an amount of 10 to 100 g/m$^2$.

11. Process according to any one of claims 1 to 10, **characterised in that** the solutions used in step (c) or step (b') contain as nutrient diluent a 0.01 to 0.5% yeast extract, preferably a 0.1% yeast extract, and a sugar.

12. Process according to any one of claims 1 to 11, **characterised in that** the pathogenic agents preferably eradicated are salmonella, listeria, coliforms, clostridium and staphylococci.

13. Aqueous solutions of bacterial complexes suitable for use in a process according to any one of claims 1 to 12, **characterised in that** they are selected from the group comprising:

   - aqueous solutions used in step (a) of the process according to any one of claims 1 to 12, containing a bacterial complex consisting of two *B. subtilis,* one *B. amyloliquefaciens* and *B. megaterium*, each in a concentration of $10^2$-$5.10^4$ cfu/ml, preferably in a concentration of $3.10^4$ cfu/ml, at least three *Lactobacilli,* including at least one *L. rhamnosus,* and one *L. paracasei,* the other *Lactobacilli* present in said solution being selected from among *L. rhamnosus*, *L. paracasei*, *L. acidophilus, L. fermentum* and a *Pediococcus pentosaceus,* each in a concentration of between $10^4$ and $5.10^8$ cfu/ml, preferably between $5.10^5$ and $5.10^8$ cfu/ml, still more preferably $5.10^7$ cfu/ml, combined with at least one suitable water-soluble nutrient diluent,
   - aqueous solutions used in step (c) of the process according to any one of claims 1 to 12, which contain the same bacterial complexes in the same concentrations as for the aqueous solutions in step (a) according to claim 1, combined with at least one water-soluble nutrient diluent selected from among the amino acid sources such as a 0.01-0.5% yeast extract and sugars,
   - aqueous solutions used in step (b') of the process according to claim 2, which contain a bacterial complex consisting of two *B. subtilis,* one *B. amyloliquefaciens* and one *B. megaterium*, each in a concentration of between $2.10^2$ and $10^5$ cfu/ml, preferably $5.10^2$ cfu/ml, at least three *Lactobacilli,* including at least one *L. rhamnosus* and one *L. paracasei*, the other *Lactobacilli* present in said solution being selected from among *L. rhamnosus*, *L. paracasei*, *L. acidophilus*, *L. fermentum* and one *Pediococcus pentosaceus,* each in a concentration of between $10^4$ and $5.10^8$ cfu/ml, preferably $10^6$ cfu/ml and, as nutrient diluent, a mixture containing a 0.01-0.5% yeast extract and a sugar.

14. Solid compositions based on bacterial complexes, **characterised in that** they are suitable for use in step (b) of the processes according to any of claims 1 and 3 to 12 and for intervening in the eradication of the carrying of pathogenic agents by animals and **in that** they are selected from among:

- "poultry litter" treatment compositions containing two *B. subtilis,* one *B. amyloliquefaciens* and one *B. megaterium* as hereinbefore defined, each in a concentration of $5.10^3$-$10^5$ cfu/g, preferably at least $10^4$ cfu/g, at least three *Lactobacilli,* including at least one *L. rhamnosus* and one *L. paracasei,* the other *Lactobacilli* present in said composition being selected from among *L. rhamnosus*, *L. paracasei*, *L. acidophilus, L. fermentum* and a *Pediococcus pentosaceus,* each in a concentration of between $10^4$ and $10^6$ cfu/g, preferably $5.10^4$ cfu/g;
- compositions for treating "ruminant, pig or horse litter" comprising the following four *Bacilli:* two *B. subtilis*, one *B. amyloliquefaciens*, *B. megaterium,* each in a concentration of between $10^3$ and $10^5$ cfu/g, preferably in a concentration of $10^4$ cfu/g, and the following five *Lactobacilli:* two *L. rhamnosus,* one *L. paracasei,* one *L. acidophilus,* one *L. fermentum*, each at a concentration of between $10^3$ and $10^6$ cfu/g, preferably $5.10^4$ cfu/g;
- compositions for treating "poultry litters" containing the following four *Bacilli;* two *B. subtilis,* one *B. amyloliquefaciens,* and one *B. megaterium,* each in a concentration of $5.10^3$-$10^6$ cfu/g, preferably $5.10^4$ cfu/g, the following six *Lactobacilli:* three *L. rhamnosus*, one *L. paracasei,* one *L. acidophilus,* one *L. fermentum* and one *Pediococcus pentosaceus*, each in a concentration of between $5.10^3$ and $10^6$ cfu/g, preferably $5.10^4$ cfu/g;
- compositions for treating "ruminant, horse and pig litters" containing the following four *Bacilli:* two *B. subtilis,* one *B. amyloliquefaciens*, *B. megaterium* as hereinbefore defined, each in a concentration of between $10^3$-$5.10^5$ cfu/g, preferably $10^4$ cfu/g, the following four *Lactobacilli:* one *L. rhamnosus,* one *L. paracasei,* one *L. acidophilus* and one *L. fermentum* and one *Pediococcus pentosaceus,* each in a concentration of between $10^3$ and $10^6$ cfu/g, preferably $5.10^4$ cfu/g;

said solid compositions further containing at least one nutrient diluent, at least one diluent having electrostatic properties and at least one microparticle fixing support, the ratio of bacterial complex plus diluents to support being between 2:98 and 15:85, preferably 5:95 (in percent by weight).

15. Use of aqueous solutions of bacterial complexes as defined in claim 13 in spraying walls, ceilings and floors of buildings and in spraying the equipment used in said buildings for the systematic eradication of the carrying of pathogenic agents by animals.

16. Use of solid compositions of bacterial complexes as defined in claim 14 in spreading on floors, litters or liquid manures used by animals, for systemically eradicating the carrying of pathogenic agents by said animals.

17. Kit for systematically eradicating the carrying of pathogenic agents by animals, **characterised in that** it comprises the following different types of compositions:

a) a composition essentially consisting of a bacterial complex in powder form and ready to be dissolved in water for treating the walls and ceilings of a building and optionally the floors, litters or liquid manures, essentially containing at least two non-pathogenic *Bacilli* selected from among *B. subtilis*, *B. amyloliquefaciens* and *B. megaterium,* each in a final concentration in solution of between $10^2$ and $5.10^4$ cfu/ml, at least two non-pathogenic *Lactobacilli* selected from among *L. paracasei* and *L. rhamnosus* and at least one non-pathogenic *Pediococcus,* each in a final concentration in solution of between $10^4$ and $5.10^8$ cfu/ml, combined with at least one suitable water-soluble nutrient diluent;

(b) a composition in powder or granule form for treating floors and litters containing (i) a bacterial complex consisting essentially of at least *B. subtilis* and at least one other non-pathogenic *Bacillus,* selected from among *B. amyloliquefaciens*, *B. megaterium*, *B. licheniformis* and *B. circulans*, each in a final concentration of between $10^3$ and $10^6$ cfu/g, at least one non-pathogenic *Lactobacillus* selected from among *L. paracasei*, *L. rhamnosus*, *L. fermentum* and *L. acidophilus* and at least one non-pathogenic *Pediococcus*, each in a final concentration of between $10^3$ and $10^8$ cfu/g, (ii) at least one nutrient diluent, (iii) at least one diluent having electrostatic properties and (iv) at least one microparticle fixing support; and

(c) a composition essentially comprising a bacterial complex in the form of a powder ready to be dissolved in water for treating equipment, essentially containing at least two non-pathogenic *Bacilli* selected from among *B. subtilis*, *B. amyloliguefaciens* and *B. megaterium,* in a final concentration in solution of between $10^2$ and $5.10^4$ cfu/ml, at least two non-pathogenic *Lactobacilli* selected from among *L. paracasei and L. rhamnosus* and at least one non-pathogenic *Pediococcus,* each in a final concentration in solution of between $10^4$ and $5.10^8$ cfu/ml, combined with at least one water-soluble nutrient diluent selected from among the amino acid sources such as a 0.01-0.5% yeast extract and sugars.

18. Compositions according to any one of claims 13 to 18, **characterised in that** the various *Bacilli* and *Lactobacilli* are selected from the following strains:

* strains of Bacillus deposited at the National Collection of Cultures of Micro-organisms (NCCM) on 8 June 1994, with regard to *Bacillus subtilis,* under numbers I-1433, I-1438 and I-1440, as regards *Bacillus amyloliquefaciens* under numbers I-1434 and I-1435, as regards *Bacillus megaterium*, under No. I-1436 as regards *Bacillus licheniformis* under No. I-1437 and as regards *Bacillus circulans* under No. I-1439;

* strains of *Lactobacillus* deposited at the National Collection of Cultures of Micro-organisms (NCCM) on 28 July 1994, as regards *Lactobacillus rhamnosus* under numbers I-1450, I-1452, I-1453, I-1454, I-1455, I-1456, I-1459, as regards *Lactobacillus paracasei* under Numbers I-1451, I-1457 and I-1458, as regards *Lactobacillus acidophilus* under No. I-1460 and as regards *Lactobacillus fermentum* under No. I-1461;

* strain of *Pediococcus pentosaceus* deposited at the National Collection of Cultures of Micro-organisms (NCCM) on 22 December 1995 under No. I-1654.

**Patentansprüche**

1. Präventivverfahren zur systematischen Beseitigung der Eigenschaften als Träger von Krankheitskeimen für Tiere vor dem Transport oder der Unterbringung von Tieren in zweckdienlichen Gebäuden, **dadurch gekennzeichnet, daß** es umfaßt:

(a) Besprühen der Seitenwände und Decken in homogener Weise mit einer wässerigen Lösung, die im wesentlichen aus einem Bakterienkomplex besteht, der im wesentlichen mindestens zwei nicht-pathogene Bacillus, ausgewählt aus der Gruppe bestehend aus B. subtilis, B. amyloliquefaciens und B. megaterium, jeweils in einer Konzentration von $10^2$ bis $5 \cdot 10^4$ kbE/ml, mindestens zwei nicht-pathogene Lactobacillus, ausgewählt aus der Gruppe bestehend aus L. paracasei und L. rhamnosus, und mindestens ein nicht-pathogenes Pediococcus, jeweils in einer Konzentration von $10^4$ bis $5 \cdot 10^8$ kbE/ml, vorzugsweise von $5 \cdot 10^5$ bis $5 \cdot 10^8$ kbE/ml, noch bevorzugter von $5 \cdot 10^7$ kbE/ml umfaßt, wobei der Bakterienkomplex mindestens mit einem Nähr-Verdünnungsmittel, das zweckdienlicherweise in Wasser löslich ist, kombiniert ist, entsprechend dem folgenden Besprühprogramm:

- erstes Besprühen zur Zeit der Herstellung der Gebäude zur Aufnahme der Tiere;
- gegebenenfalls zweites Besprühen 12 h bis 48 h nach dem ersten Besprühen;
- und gegebenenfalls drittes Besprühen etwa 7 Tage später,

wobei dieses Besprühprogramm bei Unterbringung jeder neuen (Tier-)Gruppe wiederholt wird;

(b) Streuen auf die Böden der Gebäude in homogener Weise eine Zusammensetzung in fester Form vom Pudertyp oder Granulattyp, die (i) einen Bakterienkomplex, der im wesentlichen aus mindestens einem B. subtilis und mindestens einem anderen nicht-pathogenen Bacillus, ausgewählt aus der Gruppe bestehend aus B. amyloliquefaciens, B. megaterium, B. licheniformis und B. circulans, jeweils in einer Konzentration von $10^3$ bis $10^6$ kbE/g, mindestens einem nicht-pathogenen Lactobacillus, ausgewählt aus der Gruppe bestehend aus L. paracasei, L. rhamnosus, L. fermentum und L. acidophilus, und mindestens einem nicht-pathogenen Pediococcus, jeweils in einer Konzentration von $10^3$ bis $10^8$ kbE/g besteht, (ii) mindestens ein Nähr-Verdünnungsmittel, (iii) mindestens ein Verdünnungsmittel, das elektrostatische Eigenschaften aufweist, und (iv) mindestens einen fixierenden Träger aus Mikropartikeln umfaßt, wobei das Verhältnis Bakterienkomplex + Verdünnungsmittel:Träger zwischen 2:98 und 15:85 liegt, vorzugsweise 5:95 ist (Gew.-%), entsprechend dem folgenden Streuprogramm:

- erstes Streuen auf die Böden der Gebäude, bevor Streu oder Mist (lisiers) aufgebracht wird;
- Aufbringen von Streu, wenn es welche gibt, mit anschließendem zweiten Streuen auf die Streu;
- dann nach dem Einstellen der Tiere Streuen auf das Ganze: Boden, Streu oder Mist, einmal pro Woche; und

(c) Besprühen, wenn notwendig, des Materials, das in den Gebäuden verwendet wird, mit einer Lösung, die einen Bakterienkomplex, der im wesentlichen aus mindestens zwei nicht-pathogenen Bacillus, ausgewählt aus der Gruppe bestehend aus B. subtilis, B. amyloliquefaciens und B. megaterium, jeweils in einer Konzentration von $10^2$ bis $5 \cdot 10^4$ kbE/ml, mindestens zwei nicht-pathogenen Lactobacillus, ausgewählt aus der Gruppe bestehend aus L. paracasei und L. rhamnosus, und mindestens einem nicht-pathogenen Pediococcus, jeweils in einer Konzentration von $10^4$ bis $5 \cdot 10^8$ kbE/ml, vorzugsweise in einer Konzentration von $10^6$ kbE/ml oder von $5 \cdot 10^7$ kbE/ml, besteht, kombiniert mit mindestens einem Nähr-Verdünnungsmittel, das in Wasser löslich ist, ausgewählt aus der Gruppe bestehend aus Aminosäurequellen wie z.B. ein Hefeextrakt mit 0,01 bis 0,05% und Zuckern, umfaßt und

(d) ab Einstellen der Herde systematischer Zusatz von probiotischen Produkten zur Ernährung der Herde.

2. Präventivverfahren zur systematischen Beseitigung der Eigenschaften als Träger von Krankheitskeimen für Tiere in Gebäuden, die weder Streu noch Mist aufweisen, **dadurch gekennzeichnet, daß** es umfaßt:

(a) Besprühen der Seitenwände, der Decken und der Böden der Gebäude in homogener Weise mit einer wässerigen Lösung, wie sie für Stufe (a) nach Anspruch 1 definiert ist, entsprechend dem folgenden Besprühprogramm:

- erstes Besprühen zur Zeit der Herstellung der Gebäude zur Aufnahme der Tiere;
- gegebenenfalls zweites Besprühen 12 h bis 48 h nach dem ersten Besprühen;
- wobei dieses Besprühprogramm während des Ersetzens der Tiere oder bei Unterbringung jeder neuen (Tier-)Gruppe wiederholt wird, und

(b') systematisches Besprühen des Materials, das in den Gebäuden verwendet wird, vor und/oder nach jedem Betrieb mit einer Lösung, die einen Bakterienkomplex, der im wesentlichen aus mindestens zwei nicht-pathogenen Bacillus, ausgewählt aus der Gruppe bestehend aus B. subtilis, B. amyloliquefaciens und B. megaterium, jeweils in einer Konzentration von $10^2$ bis $5 \cdot 10^4$ kbE/ml, mindestens zwei nicht-pathogenen Lactobacillus, ausgewählt aus der Gruppe bestehend aus L. paracasei und L. rhamnosus, und mindestens einem nicht-pathogenen Pediococcus, jeweils in einer Konzentration von $10^4$ bis $5 \cdot 10^8$ kbE/ml, vorzugsweise in einer Konzentration von $10^6$ kbE/ml besteht, kombiniert mit mindestens einem Nähr-Verdünnungsmittel, das in Wasser löslich ist, ausgewählt aus der Gruppe bestehend aus Aminosäurequellen, wie z.B. ein Hefeextrakt, mit 0,01 bis 0,05% und Zuckern umfaßt.

3. Verfahren zur systematischen Beseitigung der Eigenschaften als Träger von Krankheitskeimen für Tiere, wenn die Tiere schon in den zweckdienlichen Gebäuden untergebracht sind, **dadurch gekennzeichnet, daß** es umfaßt:

(a) Besprühen der Seitenwände und der Decken der Gebäude sowie der Streu oder des Mists in homogener Weise mit einer wässerigen Lösung, wie sie für Stufe (a) gemäß Anspruch 1 definiert ist, entsprechend dem folgenden Besprühprogramm:

- erstes Besprühen zu Beginn der Behandlung,
- gegebenenfalls zweites Besprühen 12 h bis 48 h nach dem ersten Besprühen;
- und gegebenenfalls drittes Besprühen etwa 7 Tage später,

(b) Streuen auf die Streu oder den Mist an Ort und Stelle in homogener Weise eine Zusammensetzung in fester Form vom Pulvertyp oder vom Granulattyp, wie sie für Stufe (b) des Verfahrens nach Anspruch 1 definiert ist, entsprechend dem folgenden Streuprogramm:

- erstes Streuen auf die Streu oder den Mist an Ort und Stelle und bei Streu allein Aufbringen von frischem Stroh und Durchführen eines zweiten Streuens,
- dann einmal pro Woche Streuen auf die Böden, die Streu oder den Mist und

(c) Besprühen, wenn notwendig, des Materials, das in den Gebäuden verwendet wird, mit einer Lösung, wie sie für Stufe (c) des Verfahrens nach Anspruch 1 definiert ist, und

(d) systematischer Zusatz von probiotischen Produkten zur Ernährung der Herde.

4.  Verfahren nach einem der Ansprüche 1 bis 3, **dadurch gekennzeichnet, daß** die Lösungen, die in Stufe (a) verwendet werden, einen Bakterienkomplex umfassen, der aus zwei B. subtilis, einem B. amyloliquefaciens und einem B. megaterium, jeweils in einer Konzentration von $10^2$ bis $3 \cdot 10^4$ kbE/ml, mindestens drei Lactobacillus, unter denen mindestens ein L. rhamnosus und ein L. paracasei ist, während die anderen Lactobacillus, die in der genannten Lösung vorliegen, aus der Gruppe bestehend aus L. rhamnosus, L. paracasei, L. acidophilus, L. fermentum ausgewählt sind, und Pediococcus pentosaceus, jeweils in einer Konzentration von $10^4$ bis $5 \cdot 10^7$ kbE/ml, vorzugsweise von $5 \cdot 10^5$ bis $5 \cdot 10^7$ kbE/ml besteht.

5.  Verfahren nach Anspruch 4, **dadurch gekennzeichnet, daß** die Lösungen von Stufe (a) zwei B. subtilis, ein B. amyloliquefaciens, ein B. megaterium, jeweils in einer Konzentration von $3 \cdot 10^4$ kbE/ml, zwei oder drei L. rhamnosus, ein L. paracasei, ein L. acidophilus, ein Pediococcus pentosaceus und gegebenenfalls ein L. fermentum, jeweils in einer Konzentration von $5 \cdot 10^7$ kbE/ml umfassen.

6.  Verfahren nach einem der Ansprüche 1 bis 5, **dadurch gekennzeichnet, daß** die Lösungen, die in Stufe (a) verwendet werden, den Bakterienkomplex in einer Konzentration von 0,5 bis 2% (p/v) enthalten.

7.  Verfahren nach einem der Ansprüche 1 bis 6, **dadurch gekennzeichnet, daß** die Lösungen, die in Stufe (a) verwendet werden, in einer Menge von 10-100 ml/m$^2$ gesprüht werden.

8.  Verfahren nach einem der Ansprüche 1 und 3 bis 7, **dadurch gekennzeichnet, daß** die festen Zusammensetzungen, die in Stufe (b) für die Behandlung von Streu verwendet werden, als Bakterienkomplexe umfassen:

    *   für Geflügel: zwei B. subtilis, ein B. amyloliquefaciens und ein B. megaterium, jeweils in einer Konzentration von $5 \cdot 10^3$ bis $10^5$ kbE/g, vorzugsweise mindestens $10^4$ kbE/g, mindestens drei Lactobacillus, unter denen mindestens ein L. rhamnosus und ein L. paracasei ist, wobei die anderen Lactobacillus, die in der Zusammensetzung vorliegen, aus der Gruppe bestehend aus L. rhamnosus, L. paracasei, L. acidophilus, L. fermentum ausgewählt sind, und ein Pediococcus pentosaceus, jeweils in einer Konzentration von $10^4$ bis $10^6$ kbE/g, vorzugsweise $5 \cdot 10^4$ kbE/g; und
    *   für die Wiederkäuer, die Pferde und die Schweine: die folgenden vier Bacillus: zwei B. subtilis, ein B. amyloliquefaciens und ein B. megaterium, jeweils in einer Konzentration von $10^3$ bis $10^5$ kbE/g, vorzugsweise $10^4$ kbE/g; und die folgenden fünf Lactobacillus: zwei L. rhamnosus, ein L. paracasei, ein L. acidophilus, ein L. fermentum, jeweils in einer Konzentration von $10^3$ bis $10^6$ kbE/g, vorzugsweise von $5 \cdot 10^4$ kbE/g.

9.  Verfahren nach einem der Ansprüche 1 und 3 bis 7, **dadurch gekennzeichnet, daß** die festen Zusammensetzungen, die in Stufe (b) verwendet werden, für die Behandlung der Streu als Bakterienkomplexe umfassen:

    *   für Geflügel: die vier folgenden Bacillus: zwei B. subtilis, ein B. amyloliquefaciens und ein B. megaterium, jeweils in einer Konzentration von $5 \cdot 10^3$ bis $10^6$ kbE/g, vorzugsweise $5 \cdot 10^4$ kbE/g; die folgenden sechs Lactobacillus: drei L. rhamnosus, ein L. paracasei, ein L. acidophilus, ein L. fermentum und ein Pediococcus pentosaceus, jeweils in einer Konzentration von $5 \cdot 10^3$ bis $10^6$ kbE/g, vorzugsweise $5 \cdot 10^4$ kbE/g und

    *   für Wiederkäuer, Pferde und Schweine: die folgenden vier Bacillus: zwei B. subtilis, ein B. amyloliquefaciens, B. megaterium, jeweils in einer Konzentration von $10^3$ bis $5 \cdot 10^5$ kbE/g, vorzugsweise $10^4$ kbE/g; die vier folgenden Lactobacillus: ein L. rhamnosus, ein L. paracasei, ein L. acidophilus und ein L. fermentum, und ein Pediococcus pentosaceus, jeweils in einer Konzentration von $10^3$ bis $10^6$ kbE/g, vorzugsweise $5 \cdot 10^4$ kbE/g.

10. Verfahren nach einem der Ansprüche 1 und 3 bis 9, **dadurch gekennzeichnet, daß** die in Stufe (b) verwendeten Zusammensetzungen in einer Menge von 10-100 g/m$^2$ verteilt werden.

11. Verfahren nach einem der Ansprüche 1 bis 10, **dadurch gekennzeichnet, daß** die in Stufe (c) oder in Stufe (b') verwendet werden, als Nähr-Verdünnungsmittel einen Hefeextrakt mit 0,01% bis 0,5%, vorzugsweise mit 0,1%, und einen Zucker umfassen.

12. Verfahren nach einem der Ansprüche 1 bis 11, **dadurch gekennzeichnet, daß** die Krankheitskeime, die vorzugsweise zerstört werden, Salmonellen, Listeria, die Koliformen, Clostridium und die Staphylokokken sind.

13. Wässerige Lösungen von Bakterienkomplexen, die zur Verwendung in einem Verfahren nach einem der Ansprüche 1 bis 12 geeignet sind, **dadurch gekennzeichnet, daß** sie aus der Gruppe ausgewählt sind, bestehend aus:

- wässerigen Lösungen, die in Stufe (a) des Verfahrens nach einem der Ansprüche 1 bis 12 verwendet werden und einen Bakterienkomplex, der aus zwei B. subtilis, einem B. amyloliquefaciens und einem B. megaterium, jeweils in einer Konzentration von $10^2$ bis $5 \cdot 10^4$ kbE/ml, vorzugsweise in einer Konzentration von $3 \cdot 10^4$ kbE/ml, mindestens drei Lactobacillus, unter denen mindestens ein L. rhamnosus und ein L. paracasei ist, die anderen Lactobacillus, die in der Lösung vorliegen, aus der Gruppe bestehend aus L. rhamnosus, L. paracasei, L. acidophilus, L. fermentum ausgewählt sind, und einem Pediococcus pentosaceus, jeweils in einer Konzentration von $10^4$ bis $5 \cdot 10^8$ kbE/ml, vorzugsweise von $5 \cdot 10^5$ bis $5 \cdot 10^8$ kbE/ml, noch bevorzugter von $5 \cdot 10^7$ kbE/ml besteht, in Kombination mit mindestens einem Nähr-Verdünnungsmittel, das zweckdienlicherweise in Wasser löslich ist, umfassen;

- wässerigen Lösungen, die in Stufe (c) des Verfahrens nach einem der Ansprüche 1 bis 12 verwendet werden und die selben Bakterienkomplexe in den selben Konzentrationen wie die wässerigen Lösungen, die in Stufe (a) gemäß Anspruch 1 verwendet werden, kombiniert mit mindestens einem Nähr-Verdünnungsmittel, das in Wasser löslich ist und aus der Gruppe bestehend aus Aminosäurequellen wie z.B. Hefeextrakt mit 0,01-0,5% und Zuckern, ausgewählt ist, umfassen;

- wässerigen Lösungen, die in Stufe (b') des Verfahrens nach Anspruch 2 verwendet werden und die einen Bakterienkomplex, der aus zwei B. subtilis, einem B. amyloliquefaciens und einem B. megaterium, jeweils in einer Konzentration von $2 \cdot 10^2$ bis $10^3$ kbE/ml, vorzugsweise $5 \cdot 10^2$ kbE/ml, mindestens drei Lactobacillus, unter denen mindestens ein L. rhamnosus und ein L. paracasei ist, die anderen in der Lösung vorliegenden Lactobacillus aus der Gruppe bestehend aus L. rhamnosus, L. paracasei, L. acidophilus, L. fermentum ausgewählt sind, und einem Pediococcus pentosaceus, jeweils in einer Konzentration von $10^4$ bis $5 \cdot 10^8$ kbE/ml, vorzugsweise von $10^6$ kbE/ml besteht, und als Nähr-Verdünnungsmittel ein Gemisch, das einen Hefeextrakt mit 0,01-0,5% und einen Zucker umfaßt, umfassen.

14. Feste Zusammensetzungen auf der Grundlage von Bakterienkomplexen, **dadurch gekennzeichnet, daß** sie zur Verwendung in Stufe (b) der Verfahren nach einem der Ansprüche 1 und 3 bis 12 und zum Eingreifen in die Beseitigung der Eigenschaften als Träger von Krankheitskeimen für Tiere geeignet sind und daß sie aus der Gruppe ausgewählt sind, die besteht aus:

- Zusammensetzungen zur Behandlung von "Streu für Geflügel", die zwei B. subtilis, ein B. amyloliquefaciens und ein B. megaterium, wie sie oben definiert wurden, jeweils in einer Konzentration von $5 \cdot 10^3$ bis $10^5$ kbE/g, vorzugsweise mindestens $10^4$ kbE/g, mindestens drei Lactobacillus, unter denen mindestens ein L. rhamnosus und ein L. paracasei ist, die anderen in der Zusammensetzung vorliegenden Lactobacillus aus der Gruppe bestehend aus L. rhamnosus, L. paracasei, L. acidophilus, L. fermentum ausgewählt sind, und ein Pediococcus pentosaceus, jeweils in einer Konzentration von $10^4$ bis $10^6$ kbE/g, vorzugsweise $5 \cdot 10^4$ kbE/g umfassen;

- Zusammensetzung zur Behandlung von "Streu von Wiederkäuern, Schweinen oder Pferden", die die folgenden vier Bacillus: zwei B. subtilis, ein B. amyloliquefaciens, B. megaterium, jeweils in einer Konzentration von $10^3$ bis $10^5$ kbE/g, vorzugsweise in einer Konzentration von $10^4$ kbE/g, und die fünf folgenden Lactobacillus: zwei L. rhamnosus, ein L. paracasei, ein L. acidophilus, ein L. fermentum, jeweils in einer Konzentration von $10^3$ bis $10^6$ kbE/g, vorzugsweise von $5 \cdot 10^4$ kbE/g, umfassen;

- Zusammensetzungen zur Behandlung von "Mist (lisiers) von Geflügel", die die folgenden vier Bacillus: zwei B. subtilis, ein B. amyloliquefaciens und ein B. megaterium, jeweils in einer Konzentration von $5 \cdot 10^3$ bis $10^6$ kbE/g, vorzugsweise von $5 \cdot 10^4$ kbE/g, die folgenden sechs Lactobacillus, drei L. rhamnosus, ein L. paracasei, ein L. acidophilus, ein L. fermentum, und ein Pediococcus pentosaceus, jeweils in einer Konzentration von $5 \cdot 10^3$ bis $10^6$ kbE/g, vorzugsweise $5 \cdot 10^4$ kbE/g, umfassen;

- Zusammensetzungen zur Behandlung von "Mist von Wiederkäuern, Pferden und Schweinen", die die folgenden vier Bacillus: zwei B. subtilis, ein B. amyloliquefaciens, ein B. megaterium, wie sie oben definiert sind, jeweils in einer Konzentration von $10^3$ bis $5 \cdot 10^5$ kbE/g, vorzugsweise von $10^4$ kbE/g, die vier folgenden Lactobacillus: ein L. rhamnosus, ein L. paracasei, ein L. acidophilus und ein L. fermentum, und ein Pediococcus pentosaceus, jeweils in einer Konzentration von $10^3$ bis $10^6$ kbE/g, vorzugsweise von $5 \cdot 10^4$ kbE/g, umfassen;

wobei die genannten festen Zusammensetzungen außerdem mindestens ein Nähr-Verdünnungsmittel, mindestens ein Verdünnungsmittel mit elektrostatischen Eigenschaften und mindestens einen fixierenden Träger aus Mikropartikeln umfassen, das Verhältnis Bakterienkomplex + Verdünnungsmittel:Träger zwischen 2:98 und 15:85 liegt, vorzugsweise 5:95 (Gew.-%) ist.

**15.** Verwendung der wässrigen Lösungen von Bakterienkomplexen, wie in Anspruch 13 definiert, zum Besprühen der Seitenwände, der Decken und der Böden von Gebäuden sowie zur Besprühung des Materials, das in den Gebäuden verwendet wird, zur systematischen 3eseitigung der Eigenschaft als Träger vcn Krankheitskeimen für die genannten Tiere.

**16.** Verwendung der festen Bakterienkomplex-Zusammensetzungen, wie sie in Anspruch 14 definiert sind, zum Streuen auf Böden, die Streu oder den Mist, die für die Tiere verwendet werden, zur systematischen Beseitigung der Eigenschaften als Träger von Krankheitskeimen für die genannten Tiere.

**17.** Kästen zur systematischen Beseitigung der Eigenschaften als Träger von Krankheitskeimen für Tiere, **dadurch gekennzeichnet, daß** er die folgenden verschiedenen Typen an- Zusammensetzungen umfaßt:

(a) eine Zusammensetzung, die im wesentlichen aus einem Bakterienkomplex in Pulverform und zum Lösen in Wasser gebrauchsfertig für die Behandlung der Wände und Decken eines Gebäudes und gegebenenfalls der Böden, der Streu oder von Mist, der im wesentlichen mindestens zwei nicht-pathogene Bacillus, ausgewählt aus der Gruppe bestehend aus B. subtilis, B. amyloliquefaciens und B. megaterium, jeweils in einer Endkonzentration in Lösung von $10^2$ bis $5 \cdot 10^4$ kbE/ml, mindestens zwei nicht-pathogenen Lactobacillus, ausgewählt aus der Gruppe bestehend aus L. paracasei und L. rhamnosus, und mindestens einem nicht-pathogenen Pediococcus, jeweils in einer Endkonzentration in Lösung von $10^4$ bis $5 \cdot 10^8$ kbE/ml, umfaßt, in Kombination mit mindestens einem Nähr-Verdünnungsmittel, das zweckdienlicherweise in Wasser löslich ist, besteht;

(b) eine Zusammensetzung in Pulverform oder Granulatform zur Behandlung der Böden oder der Streu, die (i) einen Bakterienkomplex, der im wesentlichen aus mindestens B. subtilis und mindestens einem anderen nicht-pathogenen Bacillus, ausgewählt aus der Gruppe bestehend aus B. amyloliquefaciens, B. megaterium, B. licheniformis und B. circulans, jeweils in einer Endkonzentration von $10^3$ bis $10^6$ kbE/g, mindestens einem nicht-pathogenen Lactobacillus, ausgewählt aus der Gruppe bestehend aus L. paracasei, L. rhamnosus, L. fermentum und L. acidophilus, und mindestens einem nicht pathogenen Pediococcus, jeweils in einer Endkonzentration von von $10^3$ bis $10^8$ kbE/g besteht, (ii) mindestens ein Nähr-Verdünnungsmittel, (iii) mindestens ein Verdünnungsmittel, das elektrostatische Eigenschaften aufweist, und (iv) mindestens einen fixierenden Träger aus Mikropartikeln umfaßt; und

(c) eine Zusammensetzung, die im wesentlichen einen Bakterienkomplex in Pulverform und zum Lösen in Wasser gebrauchsfertig zur Behandlung des Materials, der im wesentlichen mindestens zwei nicht-pathogene Bacillus, ausgewählt aus der Gruppe bestehend aus B. subtilis, B. amyloliquefaciens und B. megaterium, in einer Endkonzentration in Lösung von von $10^2$ bis $5 \cdot 10^4$ kbE/ml, mindestens zwei nicht-pathogene Lactobacillus, ausgewählt aus der Gruppe bestehend aus L. paracasei und L. rhamnosus, und mindestens ein nicht-pathogenes Pediococcus, jeweils in einer Endkonzentration in Lösung von $10^4$ bis $5 \cdot 10^8$ kbE/ml umfaßt, in Kombination mit mindestens einem Nähr-Verdünnungsmittel, das in Wasser löslich ist und das aus der Gruppe bestehend aus Aminosäurequellen wie Hefeextrakt mit 0,01-0,5% und Zucker, umfaßt.

**18.** Zusammensetzungen nach einem der Ansprüche 13 bis 18, **dadurch gekennzeichnet, daß** die verschiedenen Bacillus und Lactobacillus unter den folgenden Stämmen ausgewählt sind:

\* Bacillus-Stämme, hinterlegt bei der Collection Nationale de Cultures de Micro-organismes (CNCM) am 8. Juni 1994, die, die Bacillus subtilis betreffen, unter den Nummern I-1433, I-1438 und I-1440, die, die Bacillus amyloliquefaciens betreffen, unter den Nummern I-1434 und I-1435, die, die Bacillus megaterium betreffen, unter den Nummern I-1436, die, die Bacillus licheniformis betreffen, unter der Nummer I-1437 und die, die Bacillus circulans betreffen, unter der Nummer I-1439;

\* Lactobacillus-Stämme, hinterlegt bei der Collection Nationale de Cultures de Micro-organismes (CNCM) am 28. Juli 1994, die, die Lactobacillus rhamnosus betreffen, unter den Nummern I-1450, I-1452, I-1453, I-1454, I-1455, I-1456, I-1459, die, die Lactobacillus paracasei betreffen, unter den Nummern I-1451, I-1457 und I-1458, die, die Lactobacillus acidophilus betreffen, unter der Nummer I-1460, und die, die Lactobacillus fermentum betreffen, unter der Nummer I-1461;

EP 0 852 114 B1

\* Pediococcus-pentosaceus-Stamm, hinterlegt bei der Collection Nationale de Cultures de Micro-organismes (CNCM) am 22. Dezember 1995 unter der Nummer I-1654.

FIGURE 1